(19) **Europäisches Patentamt / European Patent Office / Office européen des brevets**

(11) **EP 4 376 139 A1**

(12) **EUROPEAN PATENT APPLICATION**
published in accordance with Art. 153(4) EPC

(43) Date of publication:
**29.05.2024 Bulletin 2024/22**

(21) Application number: **22884114.4**

(22) Date of filing: **21.10.2022**

(51) International Patent Classification (IPC):
**H01M 10/04** (2006.01) **H01M 10/0587** (2010.01)
**H01M 50/531** (2021.01) **H01M 10/42** (2006.01)

(52) Cooperative Patent Classification (CPC):
**B60L 50/64; H01M 4/13; H01M 4/131; H01M 4/133;**
**H01M 4/36; H01M 4/38; H01M 4/525; H01M 4/587;**
**H01M 4/62; H01M 10/04; H01M 10/052;**
**H01M 10/0525; H01M 10/0587; H01M 10/42;**
**H01M 50/516;** (Cont.)

(86) International application number:
**PCT/KR2022/016203**

(87) International publication number:
**WO 2023/068893 (27.04.2023 Gazette 2023/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.10.2021 KR 20210142179**

(71) Applicant: **LG Energy Solution, Ltd.**
**Seoul 07335 (KR)**

(72) Inventors:
• **HWANGBO, Kwang-Su**
  **Daejeon 34122 (KR)**
• **LEE, Kwan-Hee**
  **Daejeon 34122 (KR)**

(74) Representative: **Goddar, Heinz J. et al**
**Boehmert & Boehmert**
**Anwaltspartnerschaft mbB**
**Pettenkoferstrasse 22**
**80336 München (DE)**

(54) **CYLINDRICAL SECONDARY BATTERY, AND BATTERY PACK AND VEHICLE INCLUDING SAME**

(57) Disclosed is a cylindrical battery, which includes an electrode assembly; a battery housing configured to accommodate the electrode assembly through an open portion and electrically connected to the electrode assembly; a battery terminal configured to penetrate a closed portion of the battery housing and electrically connected to the electrode assembly; and a cap plate configured to cover the open portion, wherein the first electrode of the electrode assembly includes at least one insulation layer configured to simultaneously cover at least a part of the first uncoated portion and at least a part of the first coated portion, and at least a part of the first uncoated portion is used as an electrode tab by itself.

FIG. 6

**(Cont. next page)**

(52) Cooperative Patent Classification (CPC): (Cont.)
  **H01M 50/531; H01M 50/533; H01M 50/547;**
  **H01M 50/55; H01M 50/559; H01M 50/586;**
  **H01M 50/593;** Y02E 60/10

**Description**

TECHNICAL FIELD

The present disclosure relates to a cylindrical battery, and a battery pack and a vehicle including the cylindrical battery.

The present application claims priority to Korean Patent Application No. 10-2021-0142179 filed on October 22, 2021 in the Republic of Korea, the disclosures of which are incorporated herein by reference.

BACKGROUND ART

In a cylindrical battery, in order to maximize current collection efficiency, a jelly-roll type electrode assembly may be applied in which a battery housing has a positive electrode tab and a negative electrode tab extending vertically along the height direction.

In the structure as described above, there is a possibility that a movement such as meandering of the positive electrode or the negative electrode may occur. In this case, when the end of the positive electrode or negative electrode is located near the end of the separator or protrudes to the outward further than the end of the separator due to the occurrence of movement such as meandering of the positive electrode or negative electrode, electrical contact occurs between the positive electrode and the negative electrode. Alternatively, if the separator is damaged for some reason, electrical contact may occur between the positive electrode and the negative electrode. As a result, a short circuit may occur inside the battery. If a short circuit occurs inside the battery, heat generation or explosion of the battery may occur. Therefore, it is necessary to provide an insulating member to effectively prevent electrical contact between the positive electrode and the negative electrode.

Accordingly, there is a need to find a way to provide a cylindrical battery cell with low internal resistance and low risk of short circuit at the same time, and a battery pack and a vehicle including the same.

In the case of manufacturing a battery pack using a cylindrical battery, typically, a plurality of cylindrical batteries are placed upright in a housing, and the upper and lower ends of the cylindrical batteries are used as positive electrode terminals and negative electrode terminals, respectively, so that the plurality of cylindrical batteries are electrically connected to each other.

This is because, in the cylindrical batteries, a negative electrode uncoated portion of the electrode assembly accommodated inside the battery housing extends downward and is electrically connected to the bottom surface of the battery housing, and a positive electrode uncoated portion extends upward and is electrically connected to the top cap. That is, in the cylindrical battery, it is common that the bottom surface of the battery housing is used as a negative electrode terminal, and the top cap covering the top opening of the battery housing is used as a positive electrode terminal.

However, when the positive electrode terminal and the negative electrode terminal of the cylindrical battery are located on opposite sides as above, electrical connecting parts such as a bus bar for electrically connecting the plurality of cylindrical batteries must be applied to both the upper and lower portions of the cylindrical battery. This complicates the electrical connection structure of the battery pack.

Moreover, in such a structure, parts for insulation and parts for securing waterproofness or sealing must be separately applied to the upper and lower portions of the battery pack, so the number of applied parts increases and the structure becomes complicated.

Therefore, it is required to develop a cylindrical battery having a structure in which a positive electrode terminal and a negative electrode terminal are applied in the same direction to simplify the electrical connection structure of a plurality of cylindrical batteries.

On the other hand, by applying a conventional positive electrode active material containing secondary particles, particle breakage may occur during electrode manufacturing, and the amount of gas generated due to internal cracking during charging and discharging may increase, which may cause problems with battery stability.

To solve this problem, a positive electrode active material in the form of a single particle or pseudo-single particle having a relatively large primary particle size has been developed. However, if the positive electrode active material in the form of a single particle or pseudo-single particle is applied to a high loading electrode and then rolling is performed, there is a problem in that the electrode is broken in a state where the electrode porosity is not achieved to a target level, and there is a problem in that the resistance characteristics and charge/discharge efficiency of the lithium secondary battery are not good.

DISCLOSURE

Technical Problem

The present disclosure is designed in consideration of the above problems, and therefore the present disclosure is directed to providing a cylindrical battery having a structure in which a positive electrode terminal and a negative electrode terminal are applied in the same direction.

The present disclosure is also directed to securing a sufficient area for welding an electric connection component such as a bus bar with an electrode terminal of a cylindrical battery while manufacturing a battery pack, in a case where a plurality of cylindrical batteries are to be electrically connected in one direction.

The present disclosure is designed in consideration of the above problems and is also directed to reducing the internal resistance of the cylindrical battery and effectively preventing internal short circuits at the same time.

The present disclosure is also directed to providing an electrode and an electrode assembly including the same, which may implement excellent thermal stability and have high electrical conductivity and high rolling characteristics by applying a single particle or pseudo-single particle as a positive electrode active material.

The present disclosure is also directed to providing an electrode assembly with improved energy density by including a silicon-based negative electrode active material in the negative electrode.

The present disclosure is also directed to providing an electrode assembly in which the range of the positive electrode active material portion is increased without worrying about lithium precipitation.

The present disclosure is also directed to providing a cylindrical battery capable of exhibiting excellent thermal stability even when the volume of the battery increases due to an increase in form factor.

However, the technical object to be solved by the present disclosure is not limited to the above, and other objects not mentioned herein will be clearly understood by those skilled in the art from the following disclosure.

Technical Solution

In one aspect of the present disclosure, there is provided a cylindrical battery, comprising: an electrode assembly in which a first electrode having a first uncoated portion and a first coated portion, a second electrode having a second uncoated portion and a second coated portion, and a separator interposed between the first electrode and the second electrode; a battery housing configured to accommodate the electrode assembly through an open portion formed in one side and electrically connected to the electrode assembly; a battery terminal configured to penetrate a closed portion of the battery housing located in a side opposite to the open portion and electrically connected to the electrode assembly; and a cap plate configured to cover the open portion,

wherein the first electrode includes at least one insulation layer configured to simultaneously cover at least a part of the first uncoated portion and at least a part of the first coated portion, and
at least a part of the first uncoated portion is used as an electrode tab by itself.

The battery terminal may be electrically connected to the first uncoated portion having a first polarity, and the battery housing may be electrically connected to the second uncoated portion having a second polarity opposite to the first polarity.

The battery terminal may include a terminal exposing portion configured to extend to the outside of the battery housing; and a terminal insert portion configured to penetrate the closed portion of the battery housing.

The cylindrical battery may further comprise an insulating gasket interposed between the battery housing and the battery terminal to insulate the battery terminal and the battery housing from each other.

The insulating gasket may include a gasket exposing portion configured to extend to the outside of the battery housing; and a gasket insert portion configured to penetrate an upper surface of the battery housing.

The battery terminal may be riveted onto an inner surface of the battery housing.

The cap plate may be insulated from the electrode assembly to have no polarity.

The insulation layer may be provided on both surfaces of the first electrode.

One end in a winding axis direction of the insulation layer may be located at the same height as one end in the winding axis direction of the separator or outside one end.

One end in a winding axis direction of the insulation layer may be located at the same height as one end in the winding axis direction of the separator.

The first uncoated portion may protrude further to the outside of the insulation layer.

The first coated portion may not protrude more in a winding axis direction than the separator.

The first electrode may be a positive electrode.

One end of the second electrode facing the insulation layer with the separator interposed therebetween may not protrude more to the outside than one end of the separator.

The first coated portion may include a sliding portion in which the thickness of the active material layer is reduced compared to a central region of the first coated portion.

The sliding portion may be formed in a boundary region of the first coated portion and the first uncoated portion.

The sliding portion may be provided at one end of the first electrode and the other end of the second electrode, respectively.

The sliding portion of the first coated portion provided in the first electrode and the sliding portion of the second coated portion provided in the second electrode may be provided in opposite directions to each other.

The separator may protrude outward more than the other end of the first electrode and one end of the second electrode.

The insulation layer may cover at least a part of the sliding portion.

The active material layer of the first electrode may include a positive electrode active material containing a single particle, a pseudo-single particle, or a combination thereof, $D_{min}$, which a minimum particle size in a cumulative volume distribution of the positive electrode active material, may be 1.0 $\mu$m or more; in the volume cumulative distribution of the positive electrode active material, $D_{50}$, which is a particle size when a volume cumulative amount is 50%, may be 5.0 $\mu$m or less, and $D_{max}$, which is a maximum particle size in the volume cumulative distribution of the positive electrode active material, may be 12 $\mu$m to 17 $\mu$m.

The positive electrode active material may have a unimodal particle size distribution showing a single peak in a volume cumulative particle size distribution graph, and the particle size distribution (PSD) represented by the following formula may be 3 or less:

$$PSD = (D_{max} - D_{min})/D_{50}.$$

The single particle, the pseudo-single particle, or the combination thereof may be included in an amount of 95 wt% to 100 wt% based on the total weight of the positive electrode active material included in the active material layer of the first electrode.

The positive electrode active material may include a lithium nickel-based oxide containing 80 mol% or more of Ni based on the total number of moles of a transition metal.

The active material layer of the first electrode may have a porosity of 15% to 23%, and the active material layer of the first electrode may contain flake graphite in a weight ratio of 0.05 wt% to 5 wt%.

The active material layer of the first electrode may further contain carbon nanotubes.

The active material layer of the second electrode may include a silicon-based negative electrode active material and a carbon-based negative electrode active material, and the silicon-based negative electrode active material and the carbon-based negative electrode active material may be included in a weight ratio of 1 : 99 to 20 : 80.

In another aspect of the present disclosure, there is also provided a battery pack, comprising a plurality of cylindrical batteries as above, and a pack housing configured to accommodate the plurality of cylindrical batteries.

In another aspect of the present disclosure, there is also provided a vehicle, comprising the battery pack.

Advantageous Effects

According to one aspect of the present disclosure, a cylindrical battery having a structure in which a positive electrode terminal and a negative electrode terminal are applied in the same direction is provided, and thus an electrical connection structure of a plurality of cylindrical batteries can be simplified.

According to another aspect of the present disclosure, since the electrode terminal of the cylindrical battery has a sufficient area to be welded with electrical connecting parts such as bus bars, sufficient bonding strength may be secured between the electrode terminal and the electrical connecting parts, and the resistance at the bonding portion between the electrical connection parts and the electrode terminal can be lowered to a desirable level. That is, according to the present disclosure, the internal resistance of the cylindrical battery may be dramatically reduced.

Also, according to the present disclosure, by prevent electric contact between the positive electrode and the negative electrode of the electrode assembly, it is possible to effectively prevent internal short circuit of the cylindrical battery.

According to still another aspect of the present disclosure, since the positive electrode includes positive electrode active material powder having $D_{min}$ of 1.0 $\mu$m or more, thermal safety of the battery may be further improved. According to the study by inventors of the present discloser, even if a single particle and/or pseudo-single particle is applied as the positive electrode active material, the effect of suppressing particle breakage and improving thermal safety after rolling is different depending on the particle size of the positive electrode active material powder. In particular, when particles with a particle diameter of less than 1.0 $\mu$m are included in the positive electrode active material powder, the line pressure increases during the rolling process, resulting in increased particle breakage and reduced thermal stability, so it is impossible to sufficiently secure thermal stability when applying a large-sized cylindrical battery. Therefore, in the present disclosure, the effect of improving thermal safety can be maximized by using a positive electrode active material powder having a minimum particle size ($D_{min}$) controlled to 1.0 $\mu$m or more.

According to still another aspect of the present disclosure, since the positive electrode contains a positive electrode active material powder whose $D_{50}$, $D_{max}$, and particle size distribution (PSD) are appropriately adjusted so as to minimize the increase in resistance due to single particle application, it is possible to implement excellent capacity characteristics and power characteristics.

According to still another aspect of the present disclosure, the conductivity of the electrode can be improved by including a single particle-based positive electrode active material coated with a conductive coating layer or by containing novel CNT as a conductive material.

According to still another aspect of the present disclosure, since the positive electrode active material layer contains flake graphite, when the positive electrode active material layer is rolled, the flake graphite provides a sliding effect to the positive electrode active material, so that the rolling properties of the electrode are improved, and the electrode porosity can be lowered to the target level. Accordingly, stability, initial resistance characteristics, and charge/discharge efficiency of the cylindrical battery are improved.

According to still another aspect of the present disclosure, a higher energy density can be implemented by including a silicon-based negative electrode active material with a large capacity in the negative electrode.

According to still another aspect of the present disclosure, since a loading reduction portion with a small loading amount of the positive electrode active material is included in the positive electrode, the range of the positive electrode active material portion can be increased without worrying about lithium precipitation.

According to still another aspect of the present disclosure, compared to a conventional battery having a strip-shaped electrode tab, internal heat generation of the battery can be effectively reduced, so the thermal safety of the battery can be improved.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a diagram for explaining a cylindrical battery according to an embodiment of the present disclosure.
FIG. 2 is a longitudinal cross-sectional view showing the cylindrical battery of FIG. 1.
FIG. 3 is a diagram for explaining an electrode assembly included in the cylindrical battery of FIG. 1.
FIG. 4 is a diagram showing a part of the longitudinal cross-sectional view of the electrode assembly of FIG. 3.
FIG. 5 is a diagram for explaining an electrode assembly according to another embodiment of the present disclosure.
FIG. 6 is a diagram showing a part of the longitudinal cross-sectional view of the electrode assembly of FIG. 5.
FIGS. 7 and 8 are diagrams for explaining a modification of the electrode assembly of FIG. 6.
FIG. 9 is a diagram for explaining a comparative example of the electrode assembly of the present disclosure.
FIG. 10 is a graph for explaining power distribution in various short circuit cases in a secondary battery.
FIGS. 11 and 12 are partial cross-sectional views showing an upper structure of a cylindrical battery according to an embodiment of the present disclosure.
FIGS. 13 and 14 are diagrams showing a coupling structure of a first current collecting plate and an electrode assembly applied to the present disclosure.
FIG. 15 is a partial cross-sectional view showing an upper structure of a cylindrical battery according to an embodiment of the present disclosure.
FIG. 16 is a diagram showing a lower surface of a cylindrical battery according to an embodiment of the present disclosure.
FIG. 17 is a diagram showing a second current collecting plate applied to the present disclosure.
FIG. 18 is a diagram for explaining a battery pack of the present disclosure.
FIG. 19 is a diagram for explaining a vehicle of the present disclosure.
FIG. 20 is a scanning electron microscope (SEM) photograph showing a carbon nanotube (existing CNT) commonly used in the prior art.
FIG. 21 is a SEM photograph showing a novel CNT according to an embodiment of the present disclosure.
FIG. 22 is a table showing the comparison of physical properties of the existing CNT and the new CNT.
FIGS. 23 to 26 are graphs showing sheet resistance and high-temperature life characteristics for each conductive material ratio when single particle-based active material particles are applied as the positive electrode active material.
FIG. 27 is a table comparatively showing the solid content and viscosity of the positive electrode slurry and the resistance values of the MP coating layer and the MP interface layer when carbon nanotubes (new CNT) with a BET specific surface area of 300 $m^2/g$ to 500 $m^2/g$ are applied and when carbon nanotubes (existing CNT) with a BET of 200 $m^2/g$ or more and less than 300 $m^2/g$ are applied.

FIG. 28 is a SEM picture showing a positive electrode active material used in Example 2-1 of the present disclosure.

FIG. 29 is a SEM picture showing a positive electrode active material used in Example 2-2 of the present disclosure.

FIG. 30 is a SEM picture showing a positive electrode active material used in Comparative Example 2-2 of the present disclosure.

FIG. 31 is a graph showing a hot box test result of a 4680 cell manufactured by Example 1 of the present disclosure.

FIG. 32 is a graph showing a hot box test result of a 4680 cell manufactured by Comparative Example 1.

FIG. 33 is a graph showing hot box test results of Sample 1 of Example 2-1 of the present disclosure and a 4680 cell manufactured by Comparative Example 2-1.

FIG. 34 is a graph showing hot box test results of Samples 2 and 3 of Example 2-1 of the present disclosure, Samples 1 and 2 of Example 2-2, and a 4680 cell manufactured by Comparative Example 2-2.

FIG. 35 is a cross-sectional SEM picture of the positive electrode manufactured in Example 2-1 of the present disclosure.

FIG. 36 is a cross-sectional SEM picture of the positive electrode manufactured in Comparative Example 2-1.

FIG. 37 is a graph showing the results of measuring resistance characteristics according to SOC while charging a coin half-cell including a positive electrode according to Example 3-3 of the present disclosure, Comparative Example 3-1 and Comparative Example 3-2 to 4.2V.

FIG. 38 is a graph showing the measurement result of capacity retention and resistance increase (DCIR increase) obtained through a charge/discharge cycle experiment for a 4680 cell according to Example 3-1 and Example 3-3 of the present disclosure, and Comparative Example 3-1.

FIG. 39 is a diagram showing an electrode assembly according to an embodiment of the present disclosure.

FIG. 40 is a cross-sectional view, taken along the cutting line A-A' in FIG. 39.

FIGS. 41 and 42 are diagrams showing a process of manufacturing a negative electrode according to an embodiment of the present disclosure.

FIG. 43 is a perspective view showing a negative electrode according to an embodiment of the present disclosure.

FIGS. 44 and 45 are diagrams showing a process of manufacturing a positive electrode according to an embodiment of the present disclosure.

FIG. 46 is a perspective view showing a positive electrode according to an embodiment of the present disclosure.

FIG. 47 is a diagram showing an electrode assembly according to a comparative example.

FIG. 48 is a cross-sectional view, taken along the cutting line B-B' in FIG. 47.

FIG. 49 is a diagram showing a process of manufacturing a negative electrode according to a comparative example.

FIG. 50 is a diagram showing a process of manufacturing a positive electrode according to a comparative example.

FIG. 51 is a graph showing the change in energy density depending on the content of a silicon-based negative electrode active material and the presence or absence of doping of the silicon-based negative electrode active material, in a battery using a mixture of a silicon-based negative electrode active material and a carbon-based negative electrode active material as a negative electrode active material.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help the understanding of the present disclosure, the accompanying drawings are not drawn to scale, but dimensions of some components may be exaggerated. Also, the same reference signs may be assigned to the same components in different embodiments.

Since the size and thickness of each component shown in the drawings are arbitrarily illustrated for convenience of description, the present disclosure is not necessarily limited to the drawings. In the drawings, the thickness is shown enlarged to clearly express the various layers and regions. In addition, in the drawings, for convenience of explanation, the thicknesses of some layers and regions are exaggerated.

In addition, when a part such as a layer, film, region, plate, etc. is described to be "above" or "on" another part, this includes not only the case where it is "directly on" another part, but also the case where still another part exists therebetween. Conversely, when a part is described to be "directly on" another part, it means that there is no other part therebetween. In addition, to be "above" or "on" a reference part means to be located above or below the reference part, and does not mean to be located "above" or "on" in a direction opposite to gravity.

In addition, throughout the specification, when a certain part is described to "include" a certain component, it means that it may further include other components without excluding other components, unless otherwise stated.

In addition, throughout the specification, when it is referred to as "in a planar form", it means when the target part is viewed from above, and when it is referred to as "in a cross-sectional form", it means when the target part is vertically cut and viewed from the side.

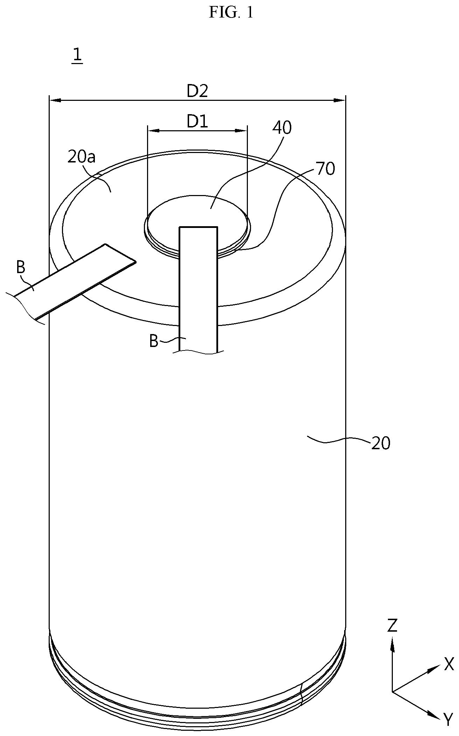

Referring to FIGS. 1 to 3, a cylindrical battery 1 according to an embodiment of the present disclosure includes an electrode assembly 10, a battery housing 20, a cap plate 30, and a terminal 40.

The cylindrical battery 1 may further include an insulating gasket 35 and/or a first current collecting plate 36 and/or an insulator 37 and/or a second current collecting plate 38 and/or a sealing gasket 39 in addition to the above-described components.

The cylindrical battery 1 may further include a first current collecting plate 50 and/or an insulator 60 and/or an insulating gasket 70 and/or a second current collecting plate 80 and/or a sealing gasket 90 in addition to the above-described components.

Referring to FIGS. 1 to 3, the electrode assembly 10 includes a first electrode 11 having a first polarity, a second electrode 12 having a second polarity, a separator 13 interposed between the first electrode 11 and the second electrode 12, and an insulation layer 14 for covering at least a part of the first electrode 11.

The first electrode 11 is a positive electrode or a negative electrode, and the second electrode 12 corresponds to an electrode having a polarity opposite to that of the first electrode 11. The first electrode 11 and the second electrode 12 may have a sheet shape. The electrode assembly 10 may have, for example, a jelly-roll shape. That is, the electrode assembly 10 may be manufactured by winding a stack, which is formed by sequentially stacking the first electrode 11, the separator 13, the second electrode 12 and the separator 13 at least once, based on the winding center C. In this case, an additional separator 13 may be provided on the outer circumference of the electrode assembly 10 to insulate the electrode assembly from the battery housing 20.

The first electrode 11 and the second electrode 12 may include uncoated portions 11a, 12a in which an active material layer is not coated, on long side ends. The first electrode 11 and the second electrode 12 may include coated portions 11b, 12b in which an active material layer is coated, in regions other than the uncoated portions 11a, 12a.

Specifically, the first electrode 11 includes a first electrode current collector and a first electrode active material coated on one surface or both surfaces of the first electrode current collector. A region where the first electrode active material is coated on the first electrode current collector is referred to as a coated portion (first coated portion) 11b provided in the first electrode 11. An uncoated portion (first uncoated portion) 11a which is not coated with the first electrode active material may be present at one end in the width direction (direction parallel to the Z-axis) of the first electrode current collector. At least a part of the uncoated portion 11a is used as an electrode tab by itself. That is, the uncoated portion 11a functions as a first electrode tab provided in the first electrode 11. The uncoated portion 11a provided in the first electrode 11 is located in the upper portion in the height direction (direction parallel to the Z-axis) of the electrode assembly 10 accommodated in the battery housing 20.

The second electrode 12 includes a second electrode current collector and a second electrode active material coated on one surface or both surfaces of the second electrode current collector. A region where the second electrode active material is coated on the second electrode current collector is referred to as a coated portion (second coated portion) 12b provided in the second electrode 12. An uncoated portion (second uncoated portion) 12a which is not coated with the second electrode active material may be present at the other end in the width direction (direction parallel to the Z-axis) of the second electrode current collector. At least a part of the uncoated portion 12a is used as an electrode tab by itself. That is, the uncoated portion 12a functions as a second electrode tab included in the second electrode 12. The uncoated portion 12a provided in the second electrode 12 is located in the lower portion in the height direction (direction parallel to the Z-axis) of the electrode assembly 10 accommodated in the battery housing 20.

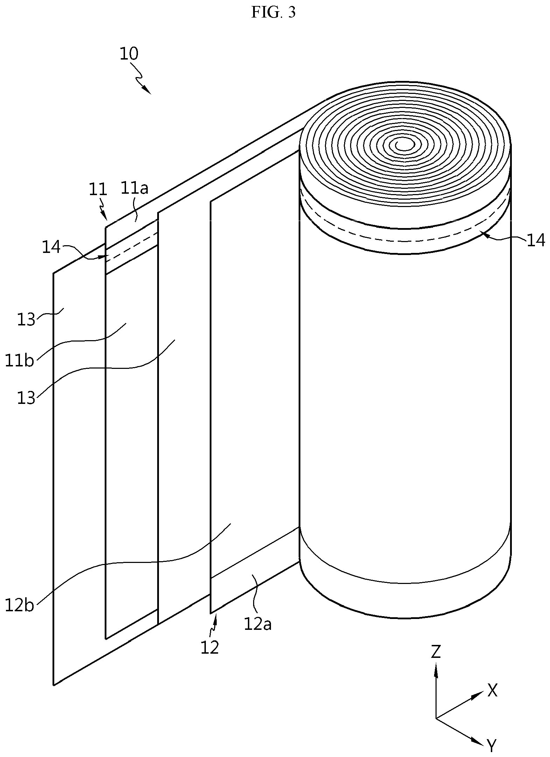

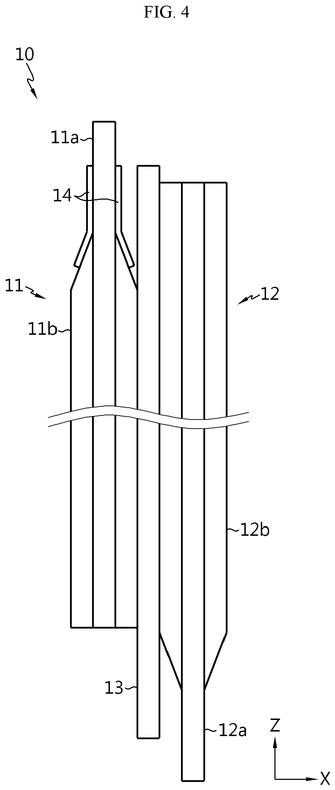

The uncoated portion 11a provided in the first electrode 11 and the uncoated portion 12a provided in the second electrode 12 may protrude in opposite directions. For example, referring to FIGS. 3 and 4, the uncoated portion 11a provided in the first electrode 11 may protrude upward in the height direction (direction parallel to the Z-axis) of the electrode assembly 10, and the uncoated portion 12a provided in the second electrode 12 may protrude downward in the height direction (direction parallel to the Z-axis) of the electrode assembly 10. Accordingly, the uncoated portion 11a provided in the first electrode and the uncoated portion 12a provided in the second electrode may be in the form of extending and protruding in opposite direction to each other along the width direction of the electrode assembly 10, that is, the height direction (direction parallel to the Z-axis) of the cylindrical battery 1.

Meanwhile, the coated portions 11b, 12b may include a sliding portion in which the active material layer has a reduced thickness compared to the central region of the coated portions 11b, 12b. For example, referring to FIG. 4, each of the first electrode 11 and the second electrode 12 may have a sliding portion, which is a region in which the thickness of the active material layer is reduced, at one end or the other end.

The sliding phenomenon means a phenomenon in which an electrode active material is less coated in the slurry-coated boundary region compared to a region other than the slurry-coated boundary region due to the spread of the slurry containing the electrode active material so that the slurry of the coated boundary region has an approximately inclined shape. Here, when the electrode is dried as a whole, the slurry volume decreases as the solvent contained in the slurry evaporates, so the sliding phenomenon may be further intensified near the boundary between the region where the electrode active material is coated and the region where the electrode active material is not coated.

The sliding portion may be formed in a boundary region of the coated portions 11b, 12b and the uncoated portions 11a, 12a. For example, the sliding portion may be provided at one end of the first electrode 11 and at the other end of the second electrode 12, respectively. That is, the sliding portion of the coated portion 11b provided in the first electrode 11 and the sliding portion of the coated portion 12b provided in the second electrode 12 may be provided in opposite directions. For example, referring to FIG. 4, the sliding portion of the first electrode 11 may be formed in the upper portion in the winding axis direction (direction parallel to the Z-axis), and the sliding portion of the second electrode 12 may be formed in the lower portion in the winding axis direction (direction parallel to the Z-axis), which is a direction opposite to the above.

Meanwhile, the length in the winding axis direction (direction parallel to the Z-axis) of the coated portion 11b provided in the first electrode 11 may be shorter than the length in the winding axis direction (direction parallel to the Z-axis) of the coated portion 12b provided in the second electrode 12. In addition, the coated portion 11b provided in the first electrode 11 may be located inward in the winding axis direction (direction parallel to the Z-axis) more than the coated portion 12b provided in the second electrode 12. For example, referring to FIG. 4, the length in the winding axis direction (direction parallel to the Z-axis) of the coated portion 12b provided on the second electrode 12 may be larger than the length in the winding axis direction (direction parallel to the Z-axis) of the coated portion 11b provided in the first electrode 11. Furthermore, referring to FIG. 4, the length in the winding axis direction (direction parallel to the Z-axis) of the coated portion 11b provided in the first electrode 11 may be formed shorter than the length in the winding axis direction (direction parallel to the Z-axis) of a region of the coated portion 12b provided in the second electrode 12 except for the sliding portion. This structure is to prevent that the NP ratio of the positive/negative electrode is reduced to less than 100% and thus lithium metal is precipitated.

Meanwhile, the coated portions 1 1b, 12b may not protrude further than the separator 13 in the winding axis direction (direction parallel to the Z-axis). That is, if the coated portions 1 1b, 12b protrude more than the separator 13 in the winding axis direction (direction parallel to the Z-axis), the possibility of contact between the first electrode 11 and the second electrode 12 may increase. If so, an internal short circuit may occur in the contact area, increasing the risk of ignition. Therefore, it is important that the coated portions 11b, 12b do not protrude in the winding axis direction (direction parallel to the Z-axis) more than the separator 13. That is, the coated portions 11b, 12b are preferably located inner than the separator 13.

In order to minimize the possibility of contact between the first electrode 11 and the second electrode 12, the first electrode 11 of the present disclosure may include at least one insulation layer 14 for simultaneously covering at least a part of the uncoated portion and at least a part of the coated portion. Electrical contact between the first electrode 11 and the second electrode 12 may be effectively prevented by the insulation layer 14. More specifically, electrical contact between the uncoated portion 11a provided in the first electrode 11 and the coated portion 12b provided in the second electrode 12 may be effectively prevented.

The insulation layer 14 may be provided on at least one surface of the first electrode 11. For example, the insulation layer 14 may be provided on both surfaces of the first electrode 11. Although not shown in FIG. 4 or the like, in FIG. 4, the separator 13 is located on the left side as well as on the right side of the first electrode 11, and another second electrode 12 is located on the left side of the separator 13 located on the left side. Therefore, in order to prevent electrical contact with the second electrodes 12 located on the left and right sides, it is preferable that the insulation layer 14 is provided on both surfaces of the first electrode 11.

The insulation layer 14 may be provided in the entire region that may face the coated portion 12b provided in the second electrode 12, among the regions of the first electrode 11. For example, one end in the winding axis direction (direction parallel to the Z-axis) of the insulation layer 14 may be located at the same height as one end in the winding axis direction (direction parallel to the Z-axis) of the separator 13 or outside one end. More specifically, referring to FIG. 4 as an example, one end in the winding axis direction (direction parallel to the Z-axis) of the insulation layer 14 may be located at the same height as one end in the winding axis direction of the separator 13. Since the separator 13 protrudes in the winding axis direction (direction parallel to the Z-axis) between the first electrode 11 and the second electrode 12, electrical contact between the first electrode 11 and the second electrode 12 may be prevented to some extent. However, since movement such as meandering of the first electrode 11 or the second electrode 12 may occur inside the cylindrical battery 1, the possibility that the second electrode 12 is located near the end of the separator 13 cannot be ruled out. Therefore, when the second electrode 12 is located even at the end of the separator 13 due to movement such as meandering or when the second electrode 12 protrudes outward more than the end of the separator 13, electrical contact between the first electrode 11 and the second electrode 12 cannot be avoided. Alternatively, if the separator 13 is damaged for some reason, electrical contact between the first electrode 11 and the second electrode 12 cannot be avoided. Therefore, even if this case occurs, in order to prevent electrical contact between the first electrode 11 and the second electrode 12, the insulation layer 14 provided on the first electrode 11 preferably extends to at least the same height as one end of the separator 13 or to the outside of one end.

However, when the insulation layer 14 covers the entire uncoated portion 11a provided in the first electrode 11, since the first electrode 11 cannot function as an electrode, the insulation layer 14 should cover only a part of the uncoated portion 11a provided in the first electrode 11. That is, the uncoated portion 11a may have a shape that protrudes outward more than the insulation layer 14.

The insulation layer 14 may be an insulating coating layer or an insulating tape provided on the boundary region of the uncoated portion 11a and the coated portion 11b. However, the form of the insulation layer 14 is not limited thereto, and any form may be employed in the present disclosure as long as the insulation layer 14 can be attached to the first electrode 11 while securing insulation performance. Meanwhile, the insulation layer 14 may include, for example, an oil-based SBR binder and alumina oxide in order to secure insulation performance.

The insulation layer 14 may simultaneously cover at least a part of the uncoated portion 11a and at least a part of the coated portion 11b. For example, the insulation layer 14 may be provided on a boundary region of the coated portion 11b and the uncoated portion 11a. For example, the insulation layer 14 may cover at least a part of the sliding portion.

For example, the insulation layer 14 may extend to a point of about 0.3 mm to 5 mm from the boundary point between the uncoated portion 11a and the coated portion 11b in the entire area of the uncoated portion 11a provided in the first electrode 11. More preferably, the insulation layer 14 may extend to a point of about 1.5 mm to 3 mm from the boundary point between the uncoated portion 11a and the coated portion 11b in the entire area of the uncoated portion 11a provided in the first electrode 11.

If there is no insulation layer 14, since there is a possibility that an internal short circuit occurs due to the contact between the first electrode 11 and the second electrode 12, the insulation layer 14 is preferably is extended to a position where electrical contact between the first electrode 11 and the second electrode 12 does not occur.

Meanwhile, the insulation layer 14 may extend to a point of about 0.1 mm to 3 mm from the boundary point between the uncoated portion 11a and the coated portion 11b in the entire area of the coated portion 11b provided in the first electrode 11. More preferably, the insulation layer 14 may extend to a point of about 0.2 mm to 0.5 mm from the boundary point between the uncoated portion 11a and the coated portion 11b in the entire area of the coated portion 11b provided in the first electrode 11.

When the insulation layer 14 covers a part of the coated portion 11b provided in the first electrode 11, a battery capacity loss occurs, and thus there is a need to minimize the length of the insulation layer 14 covering the coated portion. However, since the coated portion 11b provided in the first electrode 11 has a possibility of contacting the second electrode 12, in order to prevent this problem, the insulation layer 14 must cover at least a part of the coated portion 11b provided in the first electrode 11.

Meanwhile, referring to FIG. 4, the separator 13 may have a shape protruding outward more than the other end of the first electrode 11 and one end of the second electrode 12. For convenience, referring to FIG. 4, one end in FIG. 4 means an upper end in the winding axis direction (direction parallel to the Z-axis) on the drawing, and the other end means a lower end in the winding axis direction (direction parallel to the Z-axis) on the drawing. Accordingly, the separator 13 may have a form of protruding outward more than the lower end of the first electrode 11 and protruding outward more than the upper end of the second electrode 12. Meanwhile, the separator 13 does not protrude beyond the upper end of the first electrode 11. This is for the upper end of the first electrode 11, that is, the uncoated portion 11a, to function as the uncoated portion 11a provided in the first electrode 11. Similarly, the separator 13 does not protrude beyond the lower end of the second electrode 12. This is for the lower end of the second electrode 12, that is, the uncoated portion 12a, to function as the uncoated portion 12a provided in the second electrode 12.

Meanwhile, one end of the second electrode 12 facing the insulation layer 14 with the separator 13 interposed therebetween may have a shape that does not protrude outward more than one end of the separator 13. For example, referring to FIG. 4, the insulation layer 14 is provided at one end of the first electrode 11, and one end of the second electrode 12 facing the insulation layer 14 is located toward the inner side of the separator 13. Therefore, even if one end of the first electrode 11 protrudes to the outside of the separator 13, since one end of the second electrode 12 is located inside the separator 13, the possibility of contact between the first electrode 11 and the second electrode 12 is significantly reduced.

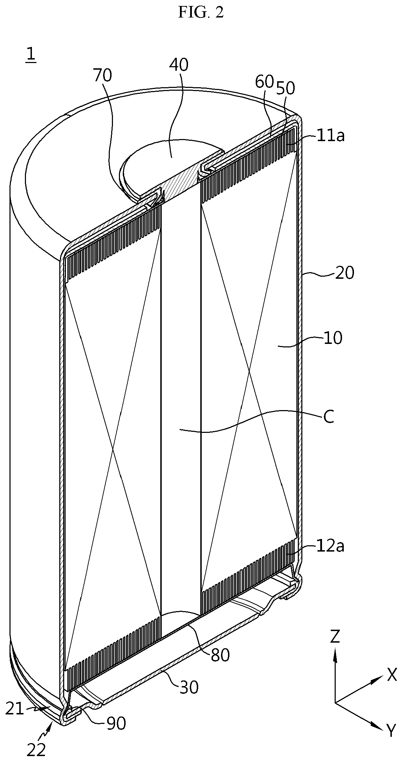

Referring to FIGS. 1 and 2, the battery housing 20 is a substantially cylindrical container having an open portion formed at a lower end thereof, and is made of, for example, a conductive material such as metal. The material of the battery housing 20 may be, for example, aluminum. The bottom portion of the battery housing 20 provided with an open portion will be referred to as an opened end. The side surface (outer circumference) and upper surface of the battery housing 20 may be integrally formed. The upper surface (parallel to the X-Y plane) of the battery housing 20 has a substantially flat shape. The upper surface located on the opposite side of the opened end is referred to as a closed end. The battery housing 20 accommodates the electrode assembly 10 through the open portion formed at a lower side, and also accommodates an electrolyte together.

The battery housing 20 is electrically connected to the electrode assembly 10. The battery housing 20 may be electrically connected to one of the first electrode 11 and the second electrode 12. For example, the battery housing may be electrically connected to the second electrode 12 of the electrode assembly 10. In this case, the battery housing 20 may have the same polarity as the second electrode 12.

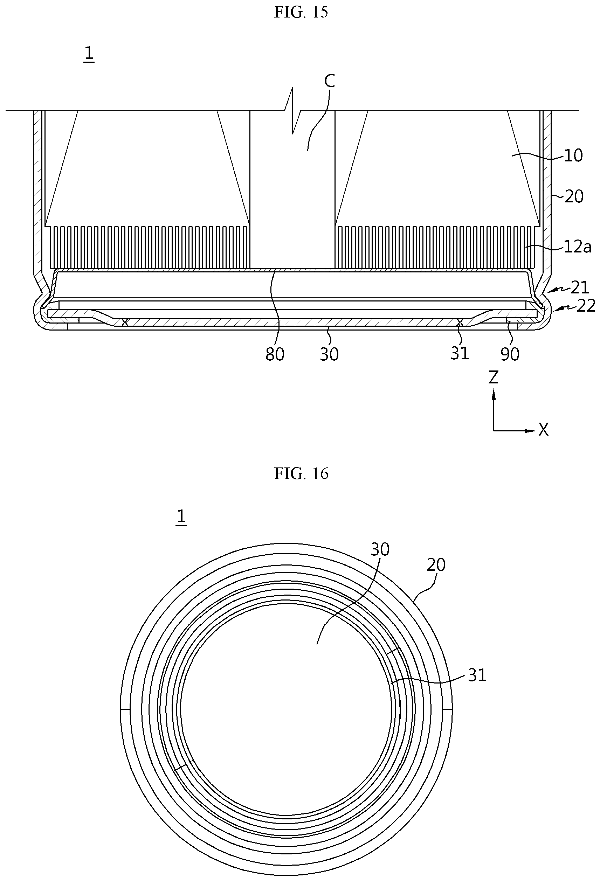

Referring to FIGS. 2 and 15, the battery housing 20 may include a beading portion 21 and a crimping portion 22 formed at a lower end thereof. The beading portion 21 is located in the lower portion of the electrode assembly 10. The beading portion 21 is formed by press-fitting the periphery of the outer circumference of the battery housing 20. The beading portion 21 prevents the electrode assembly 10, which may have a size approximately corresponding to the width of the battery housing 20, from escaping through the open portion formed at the lower end of the battery housing 20, and functions as a support on which the cap plate 30 is seated.

The crimping portion 22 is formed below the beading portion 21. The crimping portion 22 has an extended and bent shape to surround the outer circumference of the cap plate 30 disposed below the beading portion 21 and a part of the lower surface of the cap plate 30.

However, the present disclosure does not exclude the case where the battery housing 20 does not include the beading portion 21 and/or the crimping portion 22. That is, in the present disclosure, when the battery housing 20 does not include the beading portion 21 and/or the crimping portion 22, the electrode assembly 10 may be fixed and/or the battery housing 20 may be sealed by, for example, additionally applying a component that may function as a stopper for the electrode assembly 10. In addition, if the cylindrical battery 1 of the present disclosure includes the cap plate 30, the electrode assembly 10 may be fixed and/or the battery housing 20 may be sealed by, for example, additionally applying a structure on which the cap plate 30 may be seated and/or welding the battery housing 20 and the cap plate 30 to each other. That is, the cap plate 30 may seal the opened end of the battery housing.

The closed end of the battery housing 20, namely a region forming the upper surface, may have a thickness in the range of about 0.5 mm to 1.0 mm, more preferably in the range of about 0.6 mm to 0.8 mm. The sidewall of the battery housing 20 forming the outer circumference may have a thickness in the range of about 0.3 mm to 0.8 mm, more preferably in the range of about 0.40 mm to 0.60 mm. According to an embodiment of the present disclosure, a plating layer may be formed on the battery housing 20. In this case, the plating layer may include, for example, nickel (Ni). The thickness of the plating layer may be in the range of about 1.5 $\mu$m to about 6.0 $\mu$m.

As the thickness of the battery housing 20 becomes thinner, the inner space becomes larger, and as a result, the energy density is improved, which makes it possible to manufacture a cylindrical battery 1 having a large capacity. Conversely, as the thickness becomes greater, flames do not propagate in chain to adjacent cells during an explosion test, which is more advantageous is in terms of safety.

As the plating layer becomes thinner, the plating layer is more vulnerable to corrosion, and as the plating layer becomes thicker, it is more difficult to manufacture the plating layer or the possibility of plating peeling increases. Considering all of these conditions, it is necessary to set the optimal thickness of the battery housing 20 and the optimal thickness of the plating layer. Moreover, considering all of these conditions, it is necessary to control the thickness of the closed end (bottom) and the sidewall of the battery housing 20, respectively.

Referring to FIGS. 2 and 15, the cap plate 30 may be made of, for example, a metal material to secure rigidity. The cap plate 30 may cover the open portion formed at the lower end of the battery housing 20. That is, the cap plate 30 forms the lower surface of the cylindrical battery 1. In the cylindrical battery 1 of the present disclosure, the cap plate 30 may not have polarity even when it is made of a metal material having conductivity. Not having polarity may mean that the cap plate 30 is electrically insulated from the battery housing 20 and the terminal 40. Accordingly, the cap plate 30 may not function as the positive electrode terminal 40 or the negative electrode terminal 40. Accordingly, the cap plate 30 may or may not be electrically connected to the electrode assembly 10 and the battery housing 20, and the material does not necessarily have to be a conductive metal.

When the battery housing 20 of the present disclosure includes the beading portion 21, the cap plate 30 may be seated on the beading portion 21 formed in the battery housing 20. In addition, when the battery housing 20 of the present disclosure includes the crimping portion 22, the cap plate 30 may be fixed by the crimping portion 22. A sealing gasket 90 may be interposed between the cap plate 30 and the crimping portion 22 of the battery housing 20 to ensure airtightness of the battery housing 20. Meanwhile, as described above, the battery housing 20 of the present disclosure may not include the beading portion 21 and/or the crimping portion 22, and in this case, the sealing gasket 90 may be interposed between a fixing structure provided on the open portion of the battery housing 20 and the cap plate 30 to secure the airtightness of the battery housing 20.

Referring to FIGS. 15 and 16, the cap plate 30 may further include a venting portion 31 formed to prevent internal pressure from increasing beyond a preset value due to gas generated inside the battery housing 20. The venting portion 31 corresponds to an area of the cap plate 30 having a smaller thickness than the surrounding area. The venting portion 31 is structurally weak compared to the surrounding area. Therefore, when an abnormality occurs in the cylindrical battery 1 and the internal pressure of the battery housing 20 increases to a certain level or above, the venting portion 31 is ruptured so that the gas generated inside the battery housing 20 is discharged. The venting portion 31 may be formed, for example, by notching one surface or both surfaces of the cap plate 60 to partially reduce the thickness of the battery housing 20.

The cylindrical battery 1 according to an embodiment of the present disclosure has a structure in which both the positive electrode terminal and the negative electrode terminal exist on the upper portion, as will be described later, and as a result, the structure of the upper portion is more complicated than the structure of the lower portion. Accordingly, the venting portion 31 may be formed on the cap plate 30 forming the lower surface of the cylindrical battery 1 to smoothly discharge gas generated inside the battery housing 20. As shown in FIG. 15, the lower end of the cap plate 30 is preferably positioned higher than the lower end of the battery housing 20. In this case, even if the lower end of the battery housing 20 comes into contact with the ground or the bottom surface of a housing for module or pack configuration, the cap plate 30 does not touch the ground or the bottom surface of the housing for module or pack configuration. Therefore, it is possible to prevent a phenomenon in which the pressure required for rupturing the venting portion 31 differs from a design value due to the weight of the cylindrical battery 1, and accordingly, the smooth rupturing of the venting portion 31 may be secured.

Meanwhile, when the venting portion 31 has a closed loop shape as shown in FIGS. 15 and 16, it is more advantageous that the distance from the center of the cap plate 30 to the venting portion 31 is longer in terms of ease of rupture. This is because, when the same venting pressure is applied, as the distance from the center of the cap plate 30 to the venting portion 31 increases, the force acting on the venting portion 31 increases, thereby facilitating rupture. In addition, in terms of smooth discharge of the venting gas, it is more advantageous that the distance from the center of the cap plate 30 to the venting portion 31 is longer. From this point of view, it may be advantageous that the venting portion 31 is formed along the periphery of an edge of a substantially flat area, which protrudes downward (in a downward direction based on FIG. 15) from the peripheral edge area of the cap plate 30.

FIG. 16 shows a case where the venting portion 31 is continuously formed on the cap plate 30 in a substantially circular shape, but the present disclosure is not limited thereto. The venting portion 31 may be discontinuously formed on the cap plate 30 in a substantially circular shape, or may be formed in a substantially straight line shape or other shapes.

Referring to FIGS. 1 to 3 and FIGS. 11 to 13, the terminal 40 is made of a conductive metal material, and passes through the upper surface of the battery housing 20, that is, the surface (a surface parallel to the X-Y plane) opposite to the open portion formed at one side of the battery housing 20. The terminal 40 is electrically connected to, for example, the uncoated portion 11a of the first electrode 11 of the electrode assembly 10. In this case, the terminal 40 has first polarity. Accordingly, the terminal 40 may function as a first electrode terminal in the cylindrical battery 1 of the present disclosure. When the terminal 40 has the first polarity as above, the terminal 40 is electrically insulated from the battery housing 20 having the second polarity. Electrical isolation between the terminal 40 and the battery housing 20 may be realized in various ways. For example, the electric insulation may be realized by interposing an insulating gasket 70, explained later, between the terminal 40 and the battery housing 20. Alternatively, the insulation may be realized by forming an insulating coating layer on a part of the terminal 40. Alternatively, a method of structurally firmly fixing the terminal 40 may be applied so that contact between the terminal 40 and the battery housing 20 is impossible. Alternatively, several methods among the methods described above may be applied together.

The terminal 40 may include a terminal exposing portion 41 and a terminal insert portion 42. The terminal exposing portion 41 may be exposed to the outside of the battery housing 20. The terminal exposing portion 41 may be positioned approximately at the center of the upper surface of the battery housing 20. The maximum width of the terminal exposing portion 41 may be greater than the maximum width of the hole formed in the battery housing 20 by penetration of the terminal 40. The terminal insert portion 42 may be electrically connected to the uncoated portion 11a of the first electrode 11 by passing through a substantially central portion of the upper surface of the battery housing 20. The terminal insert portion 42 may be riveted onto the inner surface of the battery housing 20. That is, the end of the terminal insert portion 42 may have a shape curved toward the inner surface of the battery housing 20, and thus the maximum width of the end of the terminal insert portion 42 may be larger than the maximum width of the hole formed in the battery housing 20 by penetration of the terminal insert portion 42.

In an embodiment of the present disclosure, the upper surface of the battery housing 20 and the terminal 40 exposed to the outside of the battery housing 20 may have polarities opposite to each other and face in the same direction. In addition, a step may be formed between the terminal 40 and the upper surface of the battery housing 20. Specifically, when the entire upper surface of the battery housing 20 has a flat shape or a shape protruding upward from the center thereof, the terminal exposing portion 41 of the terminal 40 may protrude upward more than the upper surface of the battery housing 20. Conversely, when the upper surface of the battery housing 20 has a shape concavely recessed downward, that is, in a direction toward the electrode assembly 10 from the center, the upper surface of the battery housing 20 may protrude upward higher than the terminal exposing portion 41 of the battery terminal 40.

Meanwhile, in the case where the upper surface of the battery housing 20 has a shape concavely recessed downward, that is, in a direction toward the electrode assembly 10 from the center, the upper surface of the battery housing 20 and the upper surface of the terminal exposing portion 41 may form the same plane according to the recessed depth and the thickness of the terminal exposing portion 41 of the battery terminal 40. In this case, a step may not be formed between the upper surface of the battery housing 20 and the terminal exposing portion 41.

Meanwhile, when the cylindrical battery 1 of the present disclosure includes the first current collecting plate 50, the central region of the terminal insert portion 42 may be coupled with the first current collecting plate 50. The central region of the terminal insert portion 42 may have, for example, a substantially cylindrical shape. The diameter of the bottom surface of the central region of the terminal insert portion 42 may be set to approximately 6.2 mm.

The coupling between the bottom surface of the central region of the terminal insert portion 42 and the first current collecting plate 50 may be performed by, for example, laser welding or ultrasonic welding.

The laser welding may be performed by irradiating a laser through a hole formed in the winding center C of the electrode assembly 10 to form a laser welding line on one surface of the first current collecting plate 50. The laser welding line may be formed to draw a substantially concentric circle with the bottom surface of the central region of the terminal insert portion 42 in one surface of the first current collecting plate 50. The welding line may be formed continuously or partially discontinuously.

The concentric welding line may have a diameter of approximately 60% to 80% of the diameter of the bottom surface of the central region of the terminal insert portion 42. For example, when the diameter of the bottom surface of the central region of the terminal insert portion 42 is approximately 6.2 mm, the diameter of the circle drawn by the welding line may preferably be approximately 4.0 mm or more. If the diameter of the circle drawn by the welding line is too small, the coupling force by welding may be insufficient. Conversely, if the diameter of the circle drawn by the welding line is too large, the risk of damage to the electrode assembly 10 due to heat and/or welding spatter may increase. The ultrasonic welding may be performed by inserting a welding rod for ultrasonic welding through the hole formed in the winding center C of the electrode assembly 10. The welding portion formed by the ultrasonic welding is formed within the contact interface between the bottom surface of the central region of the terminal insert portion 42 and the first current collecting plate 50. The welding portion formed by the ultrasonic welding may be entirely formed within a concentric circle having a diameter of approximately 30% to 80% of the diameter of the bottom surface of the central region of the terminal insert portion 42. For example, in the case where the bottom surface of the central region of the terminal insert portion 42 has a diameter of about 6.2 mm, the diameter of the circle drawn by the ultrasonic welding portion may be about 2.0 mm or more. If the diameter of the circle drawn by the ultrasonic welding is too small, the coupling force by welding may be insufficient. Conversely, if the diameter of the circle drawn by the ultrasonic welding portion is too large, the risk of damage to the electrode assembly 10 due to heat and/or vibration may increase.

The insulating gasket 70 is interposed between the battery housing 20 and the terminal 40 to prevent contact between the battery housing 20 and the terminal 40 having opposite polarities. As a result, the upper surface of the battery housing 20 having a substantially flat shape may function as a second electrode terminal of the cylindrical battery 1.

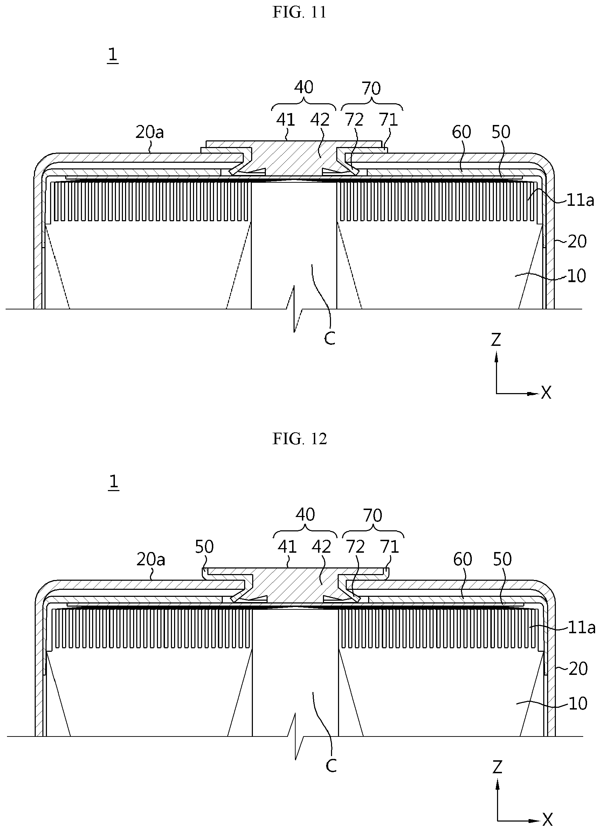

Referring to FIGS. 11 and 12, the insulating gasket 70 may include a gasket exposing portion 70 and a gasket insert portion 72. The gasket exposing portion 71 is interposed between the terminal exposing portion 41 of the terminal 40 and the battery housing 20. The gasket insert portion 72 is interposed between the terminal insert portion 42 of the terminal 40 and the battery housing 20. When the terminal insert portion 42 is riveted, the gasket insert portion 72 may be deformed together to come into close contact with the inner surface of the battery housing 20. The insulating gasket 70 may be made of, for example, an insulating resin material.

Referring to FIG. 12, the gasket exposing portion 71 of the insulating gasket 70 may have an extended shape to cover the outer circumference of the terminal exposing portion 41 of the terminal 40. If the insulating gasket 70 covers the outer circumference of the terminal 40 as above, it is possible to prevent a short circuit from occurring in the process of coupling an electrical connection part such as a bus bar to the upper surface of the battery housing 20 and/or the terminal 40. Although not shown in the drawings, the gasket exposing portion 71 of the insulating gasket 70 may have an extended shape to cover not only the outer circumference of the terminal exposing portion 41 but also a part of the upper surface.

When the insulating gasket 70 is made of a resin material, the insulating gasket 70 may be coupled to the battery housing 20 and the terminal 40 by thermal fusion. In this case, airtightness may be enhanced at a coupling interface between the insulating gasket 70 and the terminal 40 and at a coupling interface between the insulating gasket 70 and the battery housing 20. Meanwhile, when the gasket exposing portion 71 of the insulating gasket 70 has a shape extending to the upper surface of the terminal exposing portion 41, the terminal 40 may be coupled with the insulating gasket 70 by insert injection molding.

According to an embodiment of the present disclosure, the insulating gasket 70, the insulator 60 and the sealing gasket 90 may be formed of the same material. However, this is not essential. The insulating gasket 70 and the insulator 60 may have the same thickness. However, this is not essential. If they have different thicknesses, the insulator 60 may be thinner than the insulating gasket 70, or vice versa.

The entire area of the upper surface of the battery housing 20, namely the outer surface of the closed portion 20a, other than the area occupied by the terminal 40 and the insulating gasket 70 corresponds to the second electrode terminal having a polarity opposite to that of the terminal 40. In contrast, in the present disclosure, when the insulating gasket 70 is omitted and the terminal 40 is partially provided with an insulating coating layer, the entire area of the upper surface of the battery housing 20 other than the area occupied by the terminal 40 having an insulating coating layer may function as the second electrode terminal.

The cylindrical sidewall of the battery housing 20 may be formed as one piece with the closed portion 20a so that there is no discontinuous portion between the cylindrical sidewall and the second electrode terminal. The connection from the sidewall of the battery housing 20 to the closed portion 20a may be a smooth curve. However, the present disclosure is not limited thereto, and the connection portion may include at least one corner having a predetermined angle.

Referring to FIGS. 11 to 14, the first current collecting plate 50 is coupled to an upper portion of the electrode assembly 10. The first current collecting plate 50 is made of a conductive metal material and may be electrically connected to the uncoated portion 11a of the first electrode. Although not shown in the drawings, the first current collecting plate 50 may include a plurality of irregularities radially formed on its lower surface. When the irregularities are formed, the first current collecting plate 50 may be pressed so that the irregularities are press-fitted into the uncoated portion 11a of the first electrode.

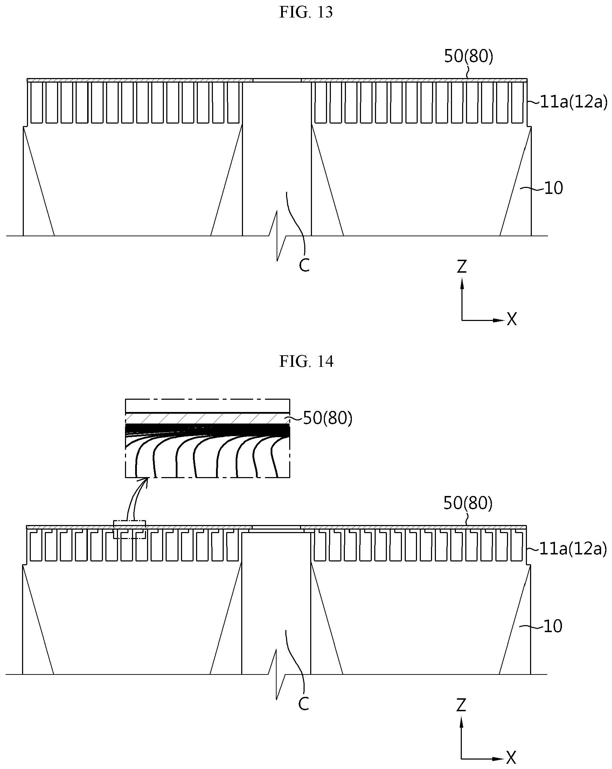

Referring to FIGS. 3 and 13, the first current collecting plate 50 is coupled to an end of the uncoated portion 11a of the first electrode 11. The coupling between the uncoated portion 11a of the first electrode 11 and the first current collecting plate 50 may be performed by, for example, laser welding. The laser welding may be performed by partially melting the base material of the first current collecting plate 50, or may be performed in a state in which a solder for welding is interposed between the first current collecting plate 50 and the uncoated portion 11a of the first electrode 11. In this case, the solder preferably has a lower melting point compared to the first current collecting plate 50 and the uncoated portion 11a of the first electrode.

Referring to FIGS. 3 and 14, the first current collecting plate 50 may be coupled on a coupling surface formed by bending an end of the uncoated portion 11a of the first electrode 11 in a direction parallel to the first current collecting plate 50. A bending direction of the uncoated portion 11a of the first electrode may be, for example, a direction toward the winding center C of the electrode assembly 10. When the uncoated portion 11a of the first electrode has such a bent shape, the space occupied by the uncoated portion 11a of the first electrode may be reduced, resulting in an improvement in energy density. In addition, due to the increase in the coupling area between the uncoated portion 11a of the first electrode and the first current collecting plate 50, coupling strength may be improved and resistance may be reduced.

Referring to FIGS. 2, 3 and 11, the insulator 60 is provided between the upper end of the electrode assembly 10 and the inner surface of the battery housing 20 or between the first current collecting plate 50 coupled to the upper portion of the electrode assembly 10 and the inner surface of the battery housing 20. The insulator 60 prevents contact between the uncoated portion 11a of the first electrode 11 and the battery housing 20 and/or contact between the first current collecting plate 50 and the battery housing 20. The insulator 60 may also be interposed between the upper end of the outer circumference of the electrode assembly 10 and the inner surface of the battery housing 20. The first current collecting plate 50 may be a plate extending completely across the upper end of the electrode assembly 10. However, the present disclosure is not limited thereto, and the first current collecting plate 50 may be formed to extend only partially across the upper end of the electrode assembly 10.

When the cylindrical battery 1 according to an embodiment of the present disclosure includes an insulator 60, the terminal insert portion 42 of the terminal 40 may pass through the insulator 60 and be coupled to the first current collecting plate 50 or the uncoated portion 11a of the first electrode 11.

The insulator 60 may have an opening adjacent to the winding center C. The opening allows the terminal insert portion 42 of the terminal 40 to directly contact the first current collecting plate 50.

In an embodiment of the present disclosure, the terminal insert portion 42 may have a circular planar shape, but is not limited thereto. The terminal insert portion 42 may optionally have a polygonal shape, a star shape, a shape having a leg extending from the center, or the like.

Referring to FIGS. 2, 3 and 15, the second current collecting plate 80 is coupled to the lower portion of the electrode assembly 10. The second current collecting plate 80 is made of a conductive metal material and may be connected to the uncoated portion 12a of the second electrode 12. In addition, the second current collecting plate 80 may be electrically connected to the battery housing 20. As shown in FIG. 15, the second current collecting plate 80 may be interposed and fixed between the inner surface of the battery housing 20 and the sealing gasket 90. Alternatively, the second current collecting plate 80 may be welded to the inner wall of the battery housing 20.

Although not shown in the drawings, the second current collecting plate 80 may include a plurality of irregularities radially formed on one surface thereof. When the irregularities are formed, the second current collecting plate 80 may be pressed so that the irregularities are press-fitted into the uncoated portion 12a of the second electrode 12.

Referring to FIGS. 3 and 13, the second current collecting plate 80 is coupled to an end of the uncoated portion 12a of the second electrode 12. The coupling between the uncoated portion 12a of the second electrode 12 and the second current collecting plate 80 may be performed by, for example, laser welding. The laser welding may be performed by partially melting the base material of the second current collecting plate 80 or by interposing a solder for welding between the second current collecting plate 80 and the uncoated portion 12a of the second electrode 12. In this case, the solder preferably has a lower melting point compared to the second current collecting plate 80 and the uncoated portion 12a of the second electrode 12.

Referring to FIGS. 3 and 14, the second current collecting plate 80 may be coupled to a coupling surface formed by bending an end of the uncoated portion 12a of the second electrode 12 in a direction parallel to the second current collecting plate 80. The bending direction of the uncoated portion 12a of the second electrode 12 may be, for example, a direction toward the winding center C of the electrode assembly 10. When the uncoated portion 12a of the second electrode 12 has such a bent shape, the space occupied by the uncoated portion 12a of the second electrode 12 may be reduced, resulting in an improvement in energy density. In addition, according to this structure, due to the increase in the coupling area between the uncoated portion 12a of the second electrode 12 and the second current collecting plate 80, coupling strength may be improved and resistance may be reduced.

Referring to FIGS. 3, 15 and 17, the second current collecting plate 80 may include a plurality of sub plates 81 extending radially from the center and spaced apart from each other. In this case, the plurality of sub plates 81 may be coupled with the uncoated portion 12a of the second electrode 12 and the battery housing 20, respectively. Meanwhile, the end of the second current collecting plate 80, namely the end of the sub plate 81, may be electrically connected to the inner surface of the sidewall of the battery housing 20, as shown in FIG. 15.

When the second current collecting plate 80 includes a plurality of sub plates 81 spaced apart from each other as above, the second current collecting plate 80 partially covers the lower surface of the electrode assembly 10. Accordingly, a sufficient space is secured for the gas generated in the electrode assembly 10 to move toward the cap plate 30, and downward gas venting may be smoothly performed in the cylindrical battery 1. Meanwhile, as described above, the structure of the second current collecting plate 80 including the plurality of sub plates 81 may be equally applied to the first current collecting plate 50 described above.

Referring to FIG. 15, the sealing gasket 90 may have a substantially ring shape surrounding the cap plate 30. The sealing gasket 90 may cover the lower surface, the upper surface, and the side surface of the cap plate 30 at the same time. A radial length of a region of the sealing gasket 90 covering the upper surface of the cap plate 30 may be smaller than or equal to a radial length of a region of the sealing gasket 90 covering the lower surface of the cap plate 30. If the radial length of the region of the sealing gasket 90 covering the upper surface of the cap plate 30 is too long, in the sizing process for vertically compressing the battery housing 20, there is a possibility that the sealing gasket 90 pressurizes the second current collecting plate 80 so that the collecting plate 80 is damaged or the battery housing 20 is damaged. Accordingly, it is necessary to keep the radial length of the region of the sealing gasket 90 covering the upper surface of the cap plate 30 to be small at a certain level.

Referring to FIGS. 1 and 2, the cylindrical battery 1 according to an embodiment of the present disclosure includes a battery terminal 40 having a first polarity and a closed portion 20a of the battery housing 20 electrically insulated from the battery terminal 40 and having a second polarity on one side in the longitudinal direction (direction parallel to the Z-axis). That is, the battery terminal 40 may function as the first electrode terminal, and the closed portion 20a of the battery housing 20 may function as the second electrode terminal. Since the pair of electrode terminals having opposite polarities are located in the same direction in the cylindrical battery 1 according to an embodiment of the present disclosure, in the case of electrically connecting a plurality of cylindrical batteries 1, it is possible to arrange electrical connection parts such as bus bars only on one side of the cylindrical battery 1. This may lead to simplification of the battery pack structure and improvement of energy density.

In addition, the cylindrical battery 1 has a structure in which one surface of the battery housing 20 having a substantially flat shape, namely the outer surface of the closed portion 20a, may be used as the second electrode terminal, so that it is possible to secure a sufficient bonding area for bonding electrical connecting parts such as bus bars to the second electrode terminal. Accordingly, in the cylindrical battery 1, sufficient bonding strength between the electrical connection parts and the second electrode terminal may be secured, and resistance at the bonding portion may be reduced to a desirable level.

Referring to FIG. 1, a bus bar B is connected to the battery terminal 40 and the outer surface of the closed portion 20a of the battery housing 20 of the cylindrical battery 1 of the present disclosure, respectively. In each of the battery terminal 40 and the closed portion 20a, in order to sufficiently secure an area for coupling the bus bar B, the area of the battery terminal 40 exposed to the outside of the battery housing 20, that is, the upper surface of the terminal exposing portion 41 may have a width (D1) set to be approximately 10% to 60% of the width (D2) of the outer surface of the closed portion 20a, that is, the upper surface of the battery housing 20.

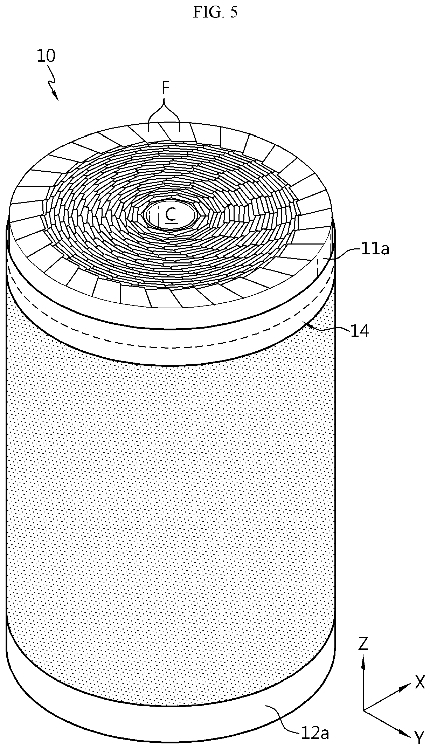

Meanwhile, the electrode assembly 10 according to the embodiment of FIG. 5 has a structure in which uncoated portions 11a, 12a are bent in the electrode assembly 10 of the embodiment of FIG. 3.

Referring to FIGS. 3 and 5, the electrode assembly 10 according to another embodiment of the present disclosure may have a structure in which at least a part of the uncoated portions 11a, 12a is bent toward the core. For example, at least a part of the uncoated portions 11a, 12a may be divided along the circumferential direction of the electrode assembly 10, thereby forming a plurality of segments F. Here, the plurality of segments F may have a multi-layered overlapping structure while being bent toward the core. For example, a plurality of segments may be formed by laser notching. The segment may be formed by a known metal foil cutting process such as ultrasonic cutting or punching.

In order to prevent damage to the active material layer and/or the insulation layer 14 when bending the uncoated portions 11a, 12a, it is preferable to leave a predetermined gap between the lower end of the cutting line between the segments and the active material layer. This is because stress is concentrated near the lower end of the cutting line when the uncoated portions 11a, 12a are bent. The gap is preferably 0.2 mm to 4 mm. When the gap is adjusted to the corresponding numerical range, it is possible to prevent damage to the active material layer and/or the insulation layer 14 near the lower end of the cutting line due to stress generated when bending the uncoated portions 11a, 12a. In addition, the gap may prevent damage to the active material layer and/or the insulation layer 14 due to tolerances when notching or cutting the segments.

The bending direction of the uncoated portions 11a, 12a may be, for example, toward the winding center C of the electrode assembly 10. When the uncoated portions 11a, 12a have such a bent shape, the space occupied by the uncoated portions 11a, 12a is reduced, resulting in an improvement in energy density. In addition, due to the increase in the coupling area between the uncoated portions 11a, 12a and the current collecting plates 50, 80 (see FIG. 14), coupling strength may be improved and resistance may be reduced.

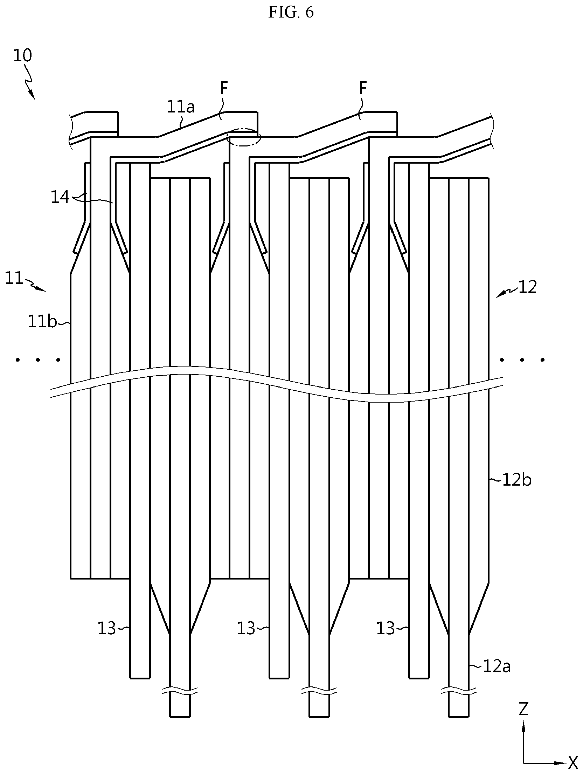

Referring to FIGS. 5 and 6, the uncoated portion 11a provided in the first electrode 11 may be bent in one direction. For example, +X direction in FIG. 6 may be a direction toward the core. When the uncoated portion 11a is bent toward the core as above, the uncoated portion 11a of the first electrode 11 may pass over the separator 13 and come closer to the second electrode 12. Therefore, it is preferable that the insulation layer 14 extends to the end of the uncoated portion 11a on the surface facing the core among both surfaces of the uncoated portion 11a provided in the first electrode 11. According to this structure, even if the uncoated portion 11a is bent toward the core and approaches the second electrode 12 beyond the separator 13, electrical contact between the first electrode 11 and the second electrode 12 may be prevented. Therefore, an internal short circuit of the cylindrical battery 1 may be effectively prevented.

When the uncoated portion 11a includes a plurality of segments F as described above, the plurality of segments F may be bent along the radial direction and overlap each other. In this case, in an area where the plurality of segments F overlaps (an area indicated by a dotted circle), the insulation layer 14 may be omitted so that the segments F are electrically connected. The structure in which the insulation layer is omitted in the overlapping region of the segments F is also applicable to other embodiments explained below.

Meanwhile, referring to FIG. 6, the insulation layer 14 may be provided only in a partial area on a surface opposite to the surface facing the core, among both surfaces of the uncoated portion 11a. That is, the uncoated portion 11a may be exposed to the outside in a remaining partial area of the surface opposite to the surface facing the core, among both surfaces of the uncoated portion 11a. Therefore, it is possible to electrically contact the uncoated portion 1 1a provided in the adjacent first electrode 11 or the first current collecting plate 50 through the exposed uncoated portion 11a on the opposite surface of the surface facing the core. That is, the uncoated portion 11a may be electrically coupled to the first current collecting plate 50 in an area not covered by the insulation layer 14 among the entire area of the uncoated portion 11a. Furthermore, the uncoated portion 11a may be coupled to the first current collecting plate 50 by welding in an area not covered by the insulation layer 14 among the entire area of the uncoated portion 11a. The welding may be, for example, laser welding. The laser welding may be performed by partially melting the base material of the first current collecting plate 50 or may be performed in a state where a solder for welding is interposed between the first current collecting plate 50 and the uncoated portion 11a. In this case, the solder preferably has a lower melting point compared to the first current collecting plate 50 and the uncoated portion 11a. Meanwhile, resistance welding, ultrasonic welding, or the like is available, in addition to laser welding, but the welding method is not limited thereto.

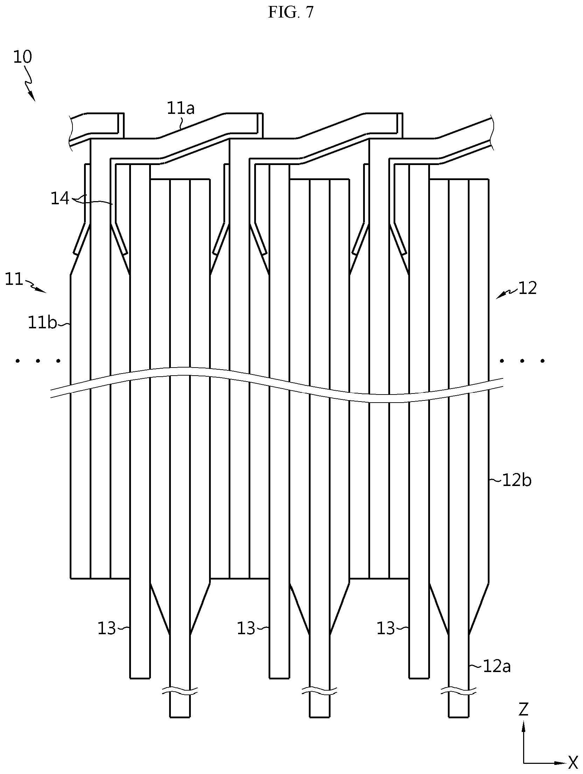

Referring to FIG. 7, the insulation layer 14 may have a shape surrounding an end of the uncoated portion 11a. Specifically, the insulation layer 14 may have a structure surrounding an end surface of the uncoated portion 11a. For example, when the length of the bent uncoated portion 11a is long, the possibility of contact with the second electrode 12 increases. Furthermore, there is a possibility that the bent uncoated portion 11a is further bent by movement or external pressure. At this time, the possibility that the end surface of the uncoated portion 11a contacts the second electrode 12 increases. However, according to the above structure of the present disclosure, even if the uncoated portion 11a is further bent or deformed, since the insulation layer 14 covers even the end surface of the uncoated portion 11a, electrical contact between the first electrode 11 and the second electrode 12 may be prevented.

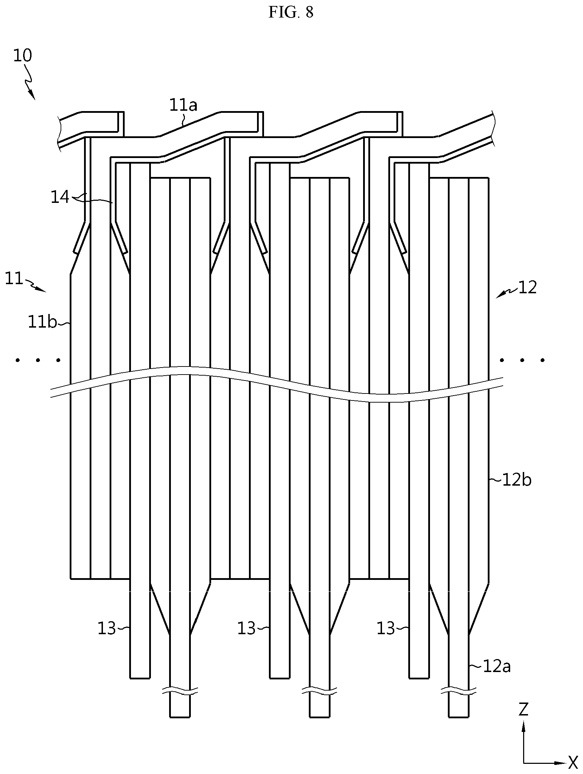

Referring to FIG. 8, the insulation layer 14 may extend to a bending point of the uncoated portion 11a on a surface opposite to the surface facing the core, among both surfaces of the uncoated portion 11a. Although not shown in the figure, another separator 13 and another second electrode 12 are located to the left of the first electrode 11 in FIG. 8. That is, the first electrode 11 has the possibility of electrically contacting the second electrode 12 located at the left of the first electrode 11 as well as the second electrode 12 located at the right of the first electrode 11. However, according to the above structure of the present disclosure, it is possible to surely prevent the first electrode 11 from electrically contacting the second electrodes 12 located at both sides.

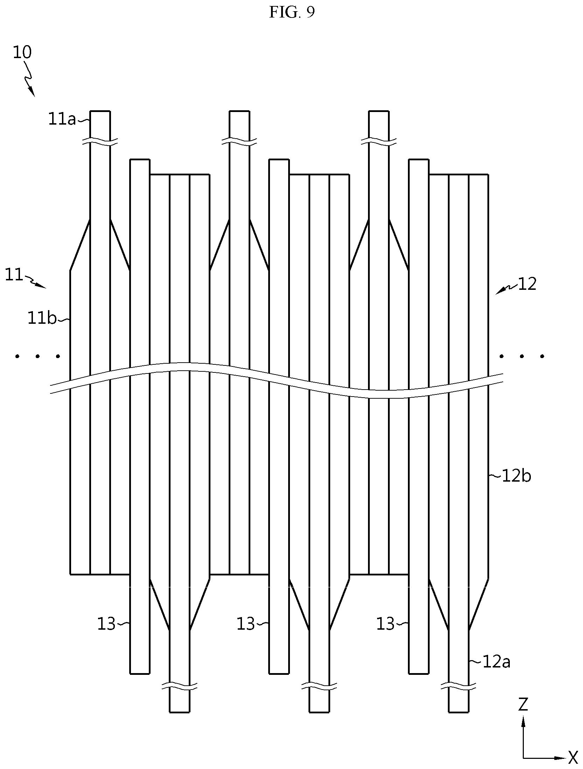

FIG. 9 is a diagram showing a cross-section of an electrode assembly 10 without an insulation layer 14, as a comparative example of the present disclosure. Referring to FIG. 9, a separate insulation layer 14 is not provided in the boundary region of the uncoated portion 11a and the coated portion 11b of the first electrode 11. According to this structure, when movement occurs due to meandering of the first electrode 11 or the second electrode 12, the second electrode 12 may be located even at the end of the separator 13 or the second electrode 12 may protrude outward more than the end of the separator 13, which may cause electrical contact between the first electrode 11 and the second electrode 12. Alternatively, if the separator 13 is damaged for some reason, electrical contact between the first electrode 11 and the second electrode 12 may occur. In this case, in the electrode assembly 10 having the structure shown in FIG. 9, the occurrence of an internal short circuit cannot be avoided due to electrical contact between the first electrode 11 and the second electrode 12. Therefore, the risk of ignition increases.

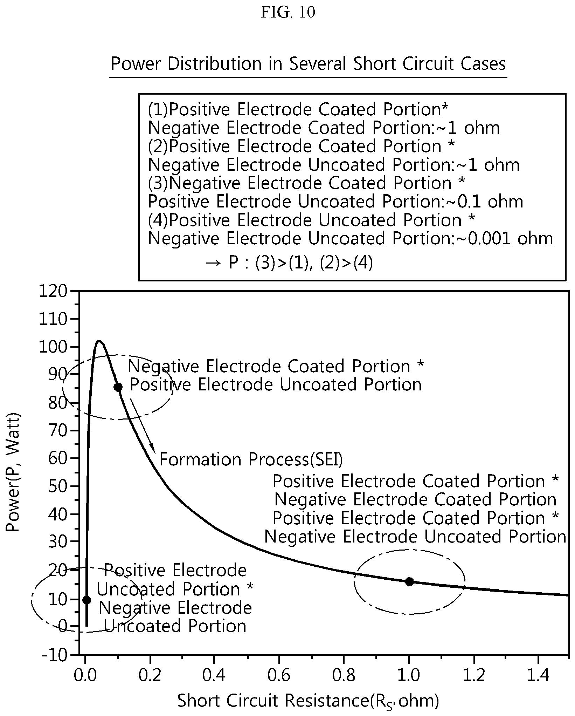

FIG. 10 is a graph for explaining power distribution in several short-circuit cases inside the cylindrical battery 1. Referring to FIG. 10, four short circuit cases that may occur inside the cylindrical battery 1 may be assumed as follows.

(1). The case where the coated portion provided in the positive electrode and the coated portion provided in the negative electrode are in electrical contact, (2). the case where the coated portion provided in the positive electrode and the uncoated portion provided in the negative electrode are in electrical contact, (3). the case where the coated portion provided in the negative electrode and the uncoated portion provided in the positive electrode electrically contact each other, and (4). the case where the uncoated portion provided in the positive electrode and the uncoated portion provided in the negative electrode are in electrical contact.

Referring to FIG. 10, it may be found that the power is highest in the case (3) where the coated portion provided in the negative electrode and the uncoated portion provided in the positive electrode are in electrical contact. That is, in the case (3) where the coated portion provided in the negative electrode and the uncoated portion provided in the positive electrode are in electrical contact, the possibility of occurrence of ignition was very high. This is because the resistance is very low and the short-circuit current is large, resulting in a rapid rise in temperature.

Therefore, considering the structure of the electrode assembly 10 of the present disclosure, it is requested to seek a structure capable of preventing electrical contact between the coated portion provided in the negative electrode and the uncoated portion provided in the positive electrode.

As a result of reviewing this task, the inventors have completed the present disclosure after deriving the fact that if the insulation layer 14 is provided on at least a partial region of the uncoated portion provided in the positive electrode, electrical contact with the coated portion provided in the negative electrode may be effectively prevented. That is, the first electrode 11 may be a positive electrode. However, the first electrode 11 is not necessarily limited to a positive electrode and may also be a negative electrode. In addition, in the present disclosure, it is not excluded that the second electrode 12 is provided with an insulation layer 14. That is, the insulation layer 14 may be provided to both the positive electrode and the negative electrode. In this case, all possible short-circuit cases can be prevented.

Preferably, the cylindrical battery 1 may be, for example, a battery whose form factor ratio (defined as a value obtained by dividing the diameter of a cylindrical battery cell by height, namely a ratio of height (H) to diameter (Φ)) is greater than about 0.4.

Here, the form factor means a value indicating the diameter and height of a cylindrical battery. The form factor of the cylindrical battery according to an embodiment of the present disclosure may be, for example, 46110 battery, 48750 battery, 48110 battery, 48800 battery, or 46800 battery. In the numerical value representing the form factor, first two numbers indicate the diameter of the battery, next two numbers indicate the height of the battery, and the last number '0' indicates that the battery has a cylindrical section.

A cylindrical battery according to an embodiment of the present disclosure may be a battery having an approximately cylindrical shape, whose diameter is approximately 46 mm, height is approximately 110 mm, and form factor ratio is 0.418.

A battery according to another embodiment may be a battery having a substantially cylindrical shape, whose diameter is about 48 mm, height is about 75 mm, and form factor ratio is 0.640.

A battery according to still another embodiment may be a battery having an approximately cylindrical shape, whose diameter is approximately 48 mm, height is approximately 110 mm, and form factor ratio is 0.436.

A battery according to still another embodiment may be a battery having an approximately cylindrical shape, whose diameter is approximately 48 mm, height is approximately 80 mm, and form factor ratio is 0.600.

A battery according to still another embodiment may be a battery having an approximately cylindrical shape, whose diameter is approximately 46 mm, height is approximately 80 mm, and form factor ratio is 0.575.

Conventionally, batteries having a form factor ratio of about 0.4 or less have been used. That is, conventionally, for example, 18650 battery, 21700 battery, etc. were used. The 18650 battery has a diameter of approximately 18 mm, height of approximately 65 mm, and a form factor ratio of 0.277. The 21700 battery has a diameter of approximately 21 mm, a height of approximately 70 mm, and a form factor ratio of 0.300.

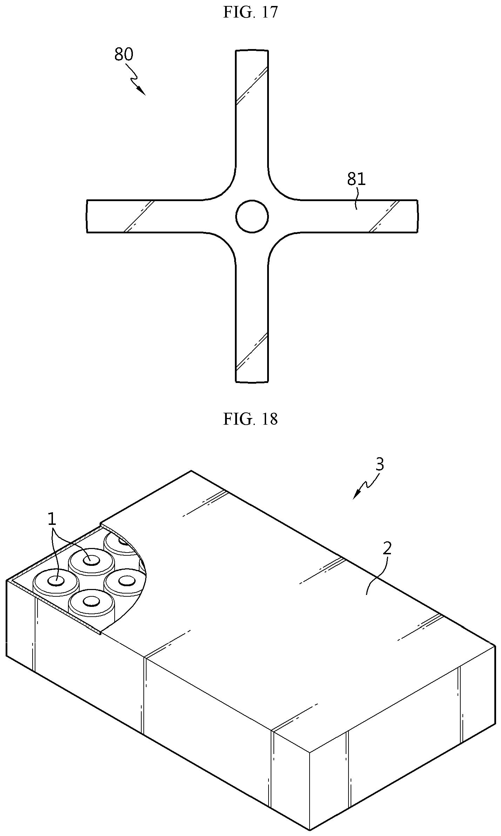

Referring to FIG. 18, a battery pack 3 according to an embodiment of the present disclosure includes a battery assembly in which a plurality of cylindrical batteries 1 according to an embodiment of the present disclosure as described above are electrically connected, and a pack housing 2 for accommodating the secondary battery assembly. In the drawing of the present disclosure, components for electrical connection such as a bus bar, a cooling unit and a power terminal are not depicted for convenience of illustration.

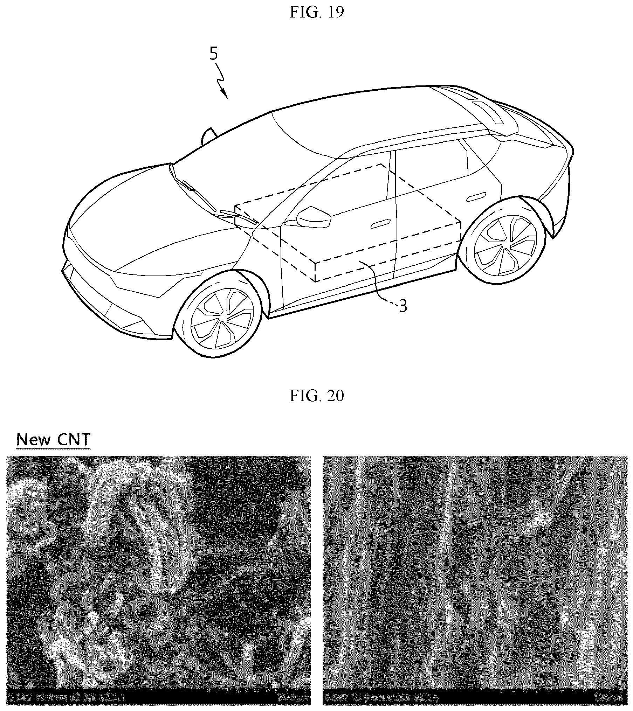

Referring to FIG. 19, a vehicle 5 according to an embodiment of the present disclosure may be, for example, an electric vehicle, a hybrid electric vehicle or a plug-in vehicle, and includes the battery pack 3 according to an embodiment of the present disclosure. The vehicle 5 includes a four-wheeled vehicle and a two-wheeled vehicle. The vehicle 5 operates by receiving a power from the battery pack 3 according to an embodiment of the present disclosure.

Hereinafter, an embodiment of a positive electrode active material used in the cylindrical battery according to the present disclosure will be described.

In an embodiment, the "primary particle" is a particle in which no grain boundary appears when observed in a field of view of 5000 to 20000 magnification using a scanning electron microscope (SEM) or an electron back scatter diffraction (EBSD). "Average particle diameter of primary particles" means an arithmetic average value calculated after measuring particle diameters of primary particles observed in a SEM or EBSD image.

"Secondary particle" is a particle formed by aggregating a plurality of primary particles. In the present disclosure, a secondary particle in which 10 or less primary particles are aggregated will be referred to as pseudo-single particles in order to distinguish it from a conventional secondary particle formed by aggregating tens to hundreds of primary particles.

In the present disclosure, "specific surface area" is measured by the BET method, and may be specifically calculated from the nitrogen gas adsorption amount under liquid nitrogen temperature (77K) using BELSORP-mino II of BEL Japan.

In the present disclosure, "$D_{min}$", "$D_{50}$" and "$D_{max}$" are particle size values of the cumulative volume distribution of the positive electrode active material measured using a laser diffraction method. Specifically, $D_{min}$ is a minimum particle size appearing in the cumulative volume distribution, $D_{50}$ is a particle size when the volume cumulative amount is 50%, and $D_{max}$ is a maximum particle size appearing in the cumulative volume distribution. If the positive electrode active material is a single particle, $D_{50}$ means an average particle diameter of the primary particles. In addition, when the positive electrode active material is a pseudo-single particle, $D_{50}$ means an average particle diameter of particles formed by aggregating primary particles.

The particle size value of the cumulative volume distribution may be measured by, for example, dispersing the positive electrode active material in a dispersion medium, then introducing the same into a commercially available laser diffraction particle size measuring device (e.g., Microtrac MT 3000), irradiating ultrasonic waves of about 28 kHz with output of 60W thereto, and obtaining a volume cumulative particle size distribution graph.

In the present disclosure, "consist essentially of A" indicates that the A component and any unmentioned components that do not substantially affect the basic and novel characteristics of the present disclosure are included. The basic and novel characteristics of the present disclosure include at least one of minimizing particle breakage during battery manufacturing, minimizing gas generated by such particle breakage, and minimizing the occurrence of internal cracks. A person skilled in the art may recognize the material influence of these characteristics.

As a result of repeated research to develop a positive electrode for an electrochemical device with high safety while realizing high capacity and an electrochemical device including the same, inventors of the present discloser have confirmed that the safety of a large cylindrical battery can be dramatically improved when the positive electrode active material in the form of a single particle composed of one primary particle or a pseudo-single particle, which is an aggregate of 10 or less primary particles, is used alone as a positive electrode active material.

According to one aspect, the positive electrode includes a positive electrode current collector; and a positive electrode active material layer formed on at least one side surface of the positive electrode current collector, wherein the positive electrode active material layer may include a positive electrode active material, and optionally, a conductive material and/or a binder.

The positive electrode may have a structure in which a positive electrode active material layer is formed on at least one surface or both surfaces of a long sheet-shaped positive electrode current collector, and the positive electrode active material layer may include a positive electrode active material and a binder.

Specifically, the positive electrode may be manufactured by applying a positive electrode slurry, which is prepared by dispersing a positive electrode active material, a conductive material and a binder in a solvent such as dimethyl sulfoxide (DMSO), isopropyl alcohol, N-methyl pyrrolidone (NMP), acetone, water or the like, on one surface or both surfaces of a long sheet-shaped positive electrode current collector, removing the solvent of the positive electrode slurry through a drying process, and then roll-pressing the same. Meanwhile, when the positive electrode slurry is applied, a positive electrode including an uncoated portion (non-coated portion) may be manufactured by not applying the positive electrode slurry to a partial area of the positive electrode current collector, for example, one end of the positive electrode current collector.

In another aspect, the positive electrode active material includes single particle-based active material particles. In one embodiment, the single particle-based active material particles may be 90wt% or more, 95wt% or more, 98wt% or more, or 99wt% or more, based on 100wt% of the positive electrode active material. In one specific embodiment, the positive electrode active material may be composed of only the single particle-based active material particles.

In this specification, the single particle-based active material particle refers to a single particle, a pseudo-single particle, or both of them. The single particle is a particle composed of one primary particle, and the pseudo-single particle is an aggregate of 10 or less primary particles.

Conventionally, it has been common to use a spherical secondary particle in which tens to hundreds of primary particles are aggregated as a positive electrode active material of a lithium battery. However, in the case of a positive electrode active material in the form of secondary particles in which many primary particles are aggregated, particle breakage in which primary particles fall off is easy to occur in the rolling process when manufacturing a positive electrode, and cracks occur inside the particles during the charging and discharging process. When particles of the positive electrode active material are broken or cracks occur inside the particles, the contact area with the electrolyte increases, so there is a problem in that gas generation due to a side reaction with the electrolyte increases. If the gas generation inside the cylindrical battery increases, the pressure inside the battery increases and there is a risk of battery explosion. In particular, when the volume of the cylindrical battery is increased, the amount of active material inside the battery increases as the volume increases, and as a result, the amount of gas generated increases significantly, so the risk of ignition and/or explosion of the battery increases further.

In contrast, the single particle-based active material particles in the form of a single particle composed of one primary particle or a pseudo-single particle in which 10 or less primary particles are aggregated have a higher particle strength than the positive electrode active material in the existing secondary particle form in which tens to hundreds of primary particles are aggregated, so particle breakage rarely occurs during the rolling process. In addition, since the number of primary particles constituting the single-particle-based active material particle is small, the volume expansion and contraction of the primary particles during charging and discharging is small, and thus the occurrence of cracks inside the particle is significantly reduced.

Therefore, when using the single particle-based active material particles as in the present disclosure, the amount of gas generated due to particle breakage and internal cracks may be significantly reduced. Accordingly, when the single particle-based active material particles are applied to a large cylindrical battery, excellent safety may be realized.

Meanwhile, the single particle and/or pseudo-single particle is included in an amount of 95wt% to 100wt%, preferably 98wt% to 100wt%, more preferably 99wt% to 100wt%, further preferably 100wt%, based on the entire weight of the positive electrode active material included in the positive electrode.

When the content of single particle and/or pseudo-single particle satisfies the above range, sufficient safety may be obtained when applied to a large-sized battery. When the positive electrode active material in the form of a secondary particle is included in an amount exceeding 5 wt% in the entire positive electrode active material, the side reaction with the electrolyte increases due to fine powder generated from the secondary particle during electrode manufacturing and charging/discharging, which may deteriorate suppression of gas generation and lower the stability improvement effect when applied to a large-sized battery.

Meanwhile, positive electrode active materials including single particles and/or pseudo-single particles according to the present disclosure may have $D_{min}$ of 1.0 $\mu$m or more, 1.1 $\mu$m or more, 1.15 $\mu$m or more, 1.2 $\mu$m or more, or 1.25 $\mu$m or more, 1.3 $\mu$m or more, or 1.5 $\mu$m or more. When the $D_{min}$ of the positive electrode active material is less than 1.0 $\mu$m, the linear pressure increases during the positive electrode rolling process, which may easily cause particle breakage and deteriorate thermal stability, making it impossible to secure sufficient thermal stability when applied to a large-sized cylindrical battery. Meanwhile, considering resistance and power characteristics, $D_{min}$ of the positive electrode active material may be 3 $\mu$m or less, 2.5 $\mu$m or less, or 2 $\mu$m or less. If $D_{min}$ is too large, the lithium ion diffusion distance within the particles may increase, and thus the resistance and power characteristics may deteriorate.

For example, $D_{min}$ of the positive electrode active material may be 1.0 $\mu$m to 3 $\mu$m, 1.0 $\mu$m to 2.5 $\mu$m, or 1.3 $\mu$m to 2.0 $\mu$m.

Meanwhile, the positive electrode active material may have a $D_{50}$ of 5 $\mu$m or less, 4 $\mu$m or less, or 3 $\mu$m or less, and may be, for example, 0.5 $\mu$m to 5 $\mu$m, preferably 1 $\mu$m to 5 $\mu$m, more preferably 2 $\mu$m to 5 $\mu$m.

The positive electrode active material in the form of single particles and/or pseudo-single particles has less lithium mobility than the positive electrode active material in the form of secondary particles because there are fewer interfaces between primary particles that serve as a diffusion path for lithium ions inside the particles, and accordingly there is a problem that the resistance increases. The increase in resistance intensifies as the size of the particles increases, and when the resistance increases, capacity and power characteristics are adversely affected. Therefore, by adjusting $D_{50}$ of the positive electrode active material to 5 $\mu$m or less, it is possible to suppress an increase in resistance by minimizing the lithium ion diffusion distance inside the positive electrode active material particle.

In addition, the positive electrode active material may have $D_{max}$ of 12 $\mu$m to 17 $\mu$m, preferably 12 $\mu$m to 16 $\mu$m, and more preferably 12 $\mu$m to 15 $\mu$m. When $D_{max}$ of the positive electrode active material satisfies the above range, resistance characteristics and capacity characteristics are more excellent. If $D_{max}$ of the positive electrode active material is too large, aggregation has occurred between single particles, and the lithium movement path inside the agglomerated particles is lengthened, resulting in poor lithium mobility, which may increase resistance. Meanwhile, if $D_{max}$ of the positive electrode active material is too small by excessive crushing process, $D_{min}$ may decrease to less than 1 $\mu$m, which causes particle breakage during rolling and deteriorates thermal stability.

Meanwhile, the positive electrode active material may have a particle size distribution (PSD) represented by Formula 1 below of 3 or less, preferably 2 to 3, more preferably 2.3 to 3.

$$\text{Formula 1: particle size distribution (PSD)} = (D_{max} - D_{min})/D_{50}$$

When the positive electrode active material has the above particle size distribution, the electrode density of the positive electrode may be properly maintained, and particle breakage and resistance increase may be effectively suppressed.

Meanwhile, the positive electrode active material may have an average particle diameter of the primary particles of 5 $\mu$m or less, 4 $\mu$m or less, 3 $\mu$m or less, or 2 $\mu$m or less, and may be, for example, 0.5 $\mu$m to 5 $\mu$m, preferably 1 $\mu$m to 5 $\mu$m, more preferably 2 $\mu$m to 5 $\mu$m. When the average particle diameter of the primary particles satisfies the above range, the positive electrode active material in the form of a single particle and/or pseudo-single particle having excellent electrochemical properties may be formed. If the average particle diameter of the primary particles is too small, the number of aggregations of the primary particles forming the positive electrode active material increases, reducing the effect of suppressing particle breakage during rolling. If the average particle diameter of the primary particles is too large, the lithium diffusion path may be elongated, increasing resistance and deteriorating power characteristics.

In the present disclosure, the positive electrode active material preferably has a unimodal particle size distribution. Conventionally, in order to improve the electrode density of the positive electrode active material layer, bimodal positive electrode active materials in which a large particle diameter positive electrode active material with a large average particle diameter and a small particle diameter positive electrode active material with a small average particle diameter are mixed has been used frequently. However, in the positive electrode active material in the form of single particles or pseudo-single particles, when the particle size increases, the lithium movement path lengthens and the resistance increases remarkably. Thus, when large-diameter particles are mixed and used, a problem of deterioration in capacity and power characteristics may occur. Therefore, in the present disclosure, the increase in resistance may be minimized by using a positive electrode active material having a unimodal distribution.

Meanwhile, the positive electrode active material may include lithium nickel-based oxide, and specifically, may include lithium nickel-based oxide containing 80 mol% or more of Ni based on the total number of moles of transition metal. Preferably, the lithium nickel-based oxide may include 80 mol% or more and less than 100 mol% of Ni, 82 mol% or more and less than 100 mol% of Ni, or 83 mol% or more and less than 100 mol% of Ni. When the lithium nickel-based oxide having a high Ni content is used as above, high capacity may be realized.

More specifically, the positive electrode active material may include a lithium nickel-based oxide represented by the following [Chemical Formula 1].

[Chemical Formula 1]     $Li_aNi_bCo_cM^1_dM^2_eO_2$

In Chemical Formula 1, $M^1$ may be Mn, Al or a combination thereof, and may be preferably Mn or Mn and Al.

$M^2$ is at least one selected from the group consisting of Zr, W, Y, Ba, Ca, Ti, Mg, Ta and Nb, preferably at least one selected from the group consisting of Zr, Y, Mg, and Ti, more preferably Zr, Y or a combination thereof. The $M^2$ element is not necessarily included, but when included in an appropriate amount, it may play a role of promoting grain growth or improving crystal structure stability during sintering.

The a represents the molar ratio of lithium in the lithium nickel-based oxide, and may be $0.8 \leq a \leq 1.2$, $0.85 \leq a \leq 1.15$, or $0.9 \leq a \leq 1.2$. When the molar ratio of lithium satisfies the above range, a crystal structure of lithium nickel-based oxide may be stably formed.

The b represents the molar ratio of nickel among all metals except lithium in the lithium nickel-based oxide, and may be $0.8 \leq b < 1$, $0.82 \leq b < 1$, $0.83 \leq b < 1$, $0.85 \leq b < 1$, $0.88 \leq b < 1$ or $0.90 \leq b < 1$. When the molar ratio of nickel satisfies the above range, it is possible to realize high capacity by exhibiting high energy density.

The c represents the molar ratio of cobalt among all metals except lithium in the lithium nickel-based oxide, and may be $0 < c < 0.2$, $0 < c < 0.18$, $0.01 \leq c \leq 0.17$, $0.01 \leq c \leq 0.15$, $0.01 \leq c \leq 0.12$ or $0.01 \leq c \leq 0.10$. When the molar ratio of cobalt satisfies the above range, good resistance characteristics and power characteristics may be implemented.

The d represents the molar ratio of $M^1$ element among all metals except lithium in the lithium nickel-based oxide, and may be $0 < d < 0.2$, $0 < d < 0.18$, $0.01 \leq d \leq 0.17$, $0.01 \leq d \leq 0.15$, $0.01 \leq d \leq 0.12$, or $0.01 \leq d \leq 0.10$. When the molar ratio of $M^1$ element satisfies the above range, the structural stability of the positive electrode active material is excellent.

The e represents the molar ratio of $M^2$ element among all metals except for lithium in the lithium nickel-based oxide, and may be $0 \leq e \leq 0.1$ or $0 \leq e \leq 0.05$.

Meanwhile, the positive electrode active material according to the present disclosure may further include, if necessary, a coating layer including at least one coating element selected from the group consisting of Al, Ti, W, B, F, P, Mg, Ni, Co, Fe, Cr, V, Cu, Ca, Zn, Zr, Nb. Mo, Sr, Sb, Bi, Si and S on the surface of the lithium nickel-based oxide particle. Preferably, the coating element may be Al, B, Co, or a combination thereof.

When the coating layer is present on the surface of lithium nickel-based oxide particles, contact between the electrolyte and the lithium nickel-based oxide is suppressed by the coating layer, thereby reducing transition metal elution or gas generation due to side reactions with the electrolyte.

The positive electrode active material may be included in an amount of 80 wt% to 99 wt%, preferably 85 wt% to 99 wt%, more preferably 90 wt% to 99 wt%, based on the total weight of the positive electrode active material layer.

Meanwhile, as the positive electrode current collector, various positive electrode current collectors used in the art may be used. For example, stainless steel, aluminum, nickel, titanium, calcined carbon or aluminum, or stainless steel surface-treated with carbon, nickel, titanium, silver, or the like may be used as the positive electrode current collector. The positive electrode current collector may typically have a thickness of 3 $\mu$m to 500 $\mu$m, and fine irregularities may be formed on the surface of the positive electrode current collector to increase adhesion of the positive electrode active material. The positive electrode current collector may be used in various forms of, for example, film, sheet, foil, net, porous material, foam, or nonwoven fabric.

Meanwhile, in one embodiment of the present disclosure, all or some of the single particle-based active material particles may have a core-shell structure in which the particle surface is coated with a conductive coating layer. The conductive coating layer may cover at least some or all of the particles. The conductive coating layer includes conductive nanomaterials.

The single particle-based active material particle has a problem in that the electrical conductivity is lowered because the resistance is higher than that of the conventional secondary particle type positive electrode active material and the contact area with the conductive material is small. When an excessive amount of conductive material is added to improve electrical conductivity, aggregation occurs in the positive electrode slurry, resulting in increased viscosity, which causes poor coating properties. Therefore, in order to implement smooth coating properties, the viscosity of the positive electrode slurry must be lowered by reducing the solid content. However, if the solid content in the positive electrode slurry decreases, the active material content decreases, which may deteriorate the capacity characteristics. In the present disclosure, in order to solve this problem, the surface of the single particle-based active material is coated with a conductive nanomaterial, so that excellent electrical conductivity may be realized without adding a separate conductive material to the positive electrode slurry.

In one embodiment of the present disclosure, when the single particle-based active material coated with a conductive nanomaterial is applied as the positive electrode active material, the positive electrode active material layer may not include a conductive material on a portion other than the conductive coating layer. Since there is no need to additionally use a conductive material that causes aggregation of the positive electrode slurry as described above, the viscosity of the positive electrode slurry may be reduced, the solid content may be decreased, and the electrode coating process efficiency and electrode adhesion may be improved.

In the present disclosure, the conductive nanomaterial may be a conductive material having a nano size so as to be smoothly coated on particles, and the type is not particularly limited. For example, the conductive nanomaterial may be a carbon nanotube, carbon nanoparticle, or the like.

The conductive nanomaterial may have various shapes, and may be, for example, spherical, flaky, or fibrous.

Meanwhile, the conductive coating layer may be formed by mixing single particle-based active material particles, which are a core part, and a conductive nanomaterial, and then thermally treating the mixture. At this time, the mixing may be performed as solid mixing or liquid mixing.

In one embodiment of the present disclosure, the positive electrode active material layer contains flake graphite. When using the single particle-based active material as the positive electrode active material, if the positive electrode active material layer contains flake graphite, in the case of rolling the positive electrode active material layer, the sliding effect of the flake graphite on the positive electrode active material is provided to improve the rolling characteristics of the electrode, and the porosity of the electrode may be lowered to a desired level. Accordingly, stability, initial resistance characteristics, and charge/discharge efficiency of a battery to which the positive electrode according to the present disclosure is applied may be improved.

In one embodiment of the present disclosure, the flake graphite may be included in an amount of 0.1 wt% to 5 wt%, preferably 0.1 wt% to 3 wt%, based on 100 wt% of the positive electrode active material layer.

When the content of flake graphite satisfies the above range, the positive electrode rolling characteristics are improved and excellent electrode density may be realized. If the content of flake graphite is too small, the effect of improving the rolling properties is insignificant, and if it is too large, it may cause an increase in slurry viscosity and decrease in phase stability, and resistance may increase due to a decrease in electrode uniformity through coupling with a conductive material.

Meanwhile, the flake graphite used in the present disclosure may have an average particle diameter of 1 $\mu$m

to 20 $\mu$m, preferably 2 $\mu$m to 10 $\mu$m, more preferably 3 $\mu$m to 5 $\mu$m, but is not limited thereto. If the size of the flake graphite is too small, it is difficult to realize the desired porosity, and the current density may be lowered, resulting in lower capacity. At this time, the average particle diameter of the flake graphite may be measured using a laser diffraction method (ISO 13320).

In addition, the flake graphite may have an aspect ratio of 0.1 to 500, preferably 1 to 100, more preferably 1 to 30. When the aspect ratio of flake graphite satisfies the above range, the effect of lowering electrode resistance by improving conductivity occurs.

In addition, the flake graphite may have a density of 2.0 $g/cm^3$ to 2.5 $g/cm^3$, preferably 2.1 $g/cm^3$ to 2.4 $g/cm^3$, more preferably 2.2 $g/cm^3$ to 2.3 $g/cm^3$.

Meanwhile, in the present disclosure, the porosity of the positive electrode active material layer may be 15% to 23%, preferably 17% to 23%, more preferably 18% to 23%. When the porosity of the positive electrode active material layer satisfies the above range, the electrode density increases to realize excellent capacity and the resistance decreases. If the porosity is too low, the electrolyte impregnability is low, and lithium precipitation may occur due to non-impregnation of the electrolyte. If the porosity is too high, the contact between the electrodes is not good, which increases the resistance and decreases the energy density, so the capacity improvement effect is insignificant.

The porosity value of the positive electrode active material layer may be achieved i) by the positive electrode active material containing single particle-based active material particles and ii) by adding flake graphite to the positive electrode active material.

In implementing a high loading electrode with a relatively high loading amount of the positive electrode active material, when using a positive electrode active material in the form of a single particle or pseudo-single particle as in the present disclosure, particle breakage of the active material during rolling is significantly reduced compared to the conventional positive electrode active material in the form of a secondary particle, and damage to the positive electrode current collector (Al foil) is reduced, so rolling is possible with a relatively high linear pressure. Therefore, the porosity of the positive electrode active material layer may be decreased to the numerical range as described above, so the energy density may be increased.

In addition, if the positive electrode active material layer contains flake graphite as in the present disclosure, the flake graphite may provide a sliding effect during rolling and fill the pores of the positive electrode active material layer, so the porosity of the positive electrode active material layer may be reduced to the above numerical range.

In addition, the positive electrode may have a loading amount of 570 $mg/25cm^2$ or more, preferably 600 $mg/25cm^2$ to 800 $mg/25cm^2$, more preferably 600 $mg/25cm^2$ to 750 $mg/25cm^2$. Specifically, in the lithium secondary battery according to the present disclosure, the loading amount of the positive electrode may be secured in a relatively high level because the rolling characteristics of the electrode are improved by applying a single particle and/or pseudo-single particle positive electrode active material and flake graphite, and through this, high-capacity characteristics may be implemented.

In one embodiment of the present disclosure, the positive electrode active material layer may further include a conductive material. The conductive material is used to impart conductivity to the electrode, and any material that does not cause chemical change inside the battery and has electronic conductivity may be used without particular limitations. Specific examples may include graphite such as natural graphite or artificial graphite; carbon-based materials such as carbon black, acetylene black, Ketjen black, channel black, furnace black, lamp black, thermal black, carbon fiber, or carbon nanotube; metal powder or metal fiber such as copper, nickel, aluminum, or silver; conductive whiskers such as zinc oxide or potassium titanate; conductive metal oxides such as titanium oxide; and conductive polymers of polyphenylene derivatives and the like, which may be used alone or as a mixture. The conductive material may be typically included in an amount of 1 wt% to 30 wt%, preferably 1 wt% to 20 wt%, more preferably 1 wt% to 10 wt%, based on the total weight of the positive electrode active material layer.

In one specific embodiment of the present disclosure, the conductive material may include carbon nanotube.

In one embodiment of the present disclosure, the positive electrode active material may include a multi-wall carbon nanotube having a large specific surface area and a small wall number as a conductive material. The multi-wall carbon nanotube may be included in an amount of 50 wt% or more, 70 wt% or more, 90 wt% or more, or 99 wt% or more, based on 100 wt% of the conductive material. In a specific embodiment of the present disclosure, the conductive material may include only the multi-walled carbon nanotube.

In the present disclosure, the multi-wall carbon nanotube has a BET specific surface area of 300 $m^2/g$ to 500 $m^2/g$. The multi-wall carbon nanotube is referred to as 'new CNT' in order to be distinguished from the conventional one.

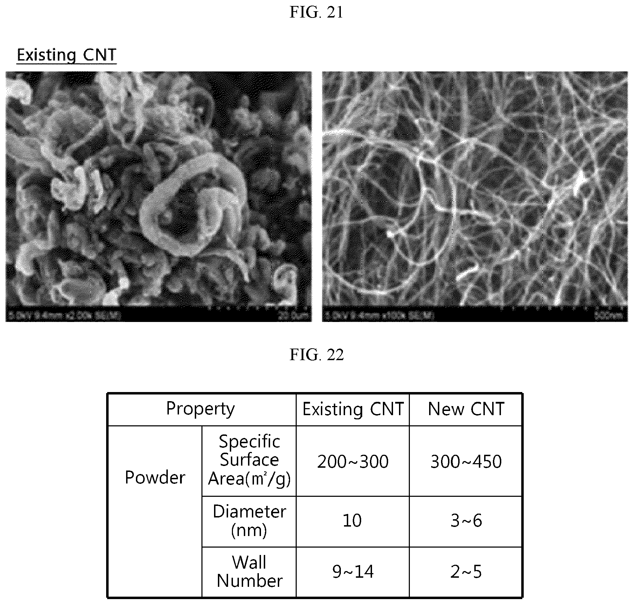

The carbon nanotube (conventional CNT) commonly used in the art had a BET specific surface area of less than 300 $m^2/g$. The SEM images and physical properties (FIG. 22) of the new CNT (FIG. 20) used in the present disclosure and the existing CNT (FIG. 21) may be compared as follows.

As can be seen from the SEM images, the new CNT applied to the present disclosure is a bundled type and has a multi-wall structure, but has a higher BET and a smaller wall number and diameter than the conventional CNT.

In the case of using the positive electrode active material in the form of a secondary particle, sufficient electrical conductivity could be achieved even if the existing CNT was used at a level of 0.4wt% to 0.6wt%. However, the single particle or pseudo-single particle positive electrode active material has higher resistance, compared to the conventional secondary particle type positive electrode active material, and the contact area with the conductive material is small, so the electrical conductivity is low. Thus, in order to realize sufficient electrical conductivity using the existing CNT with a BET specific surface area of less than 300 $m^2/g$, the content of the conductive material must be 0.9 wt% or more.

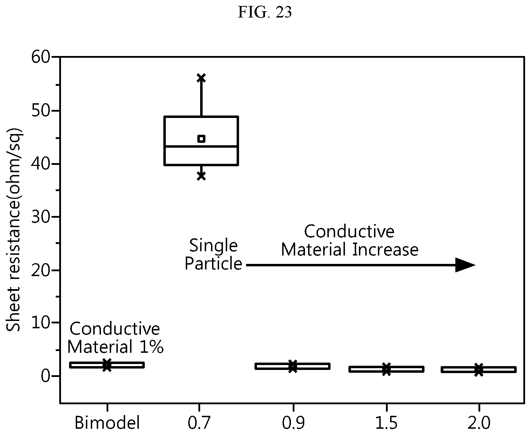

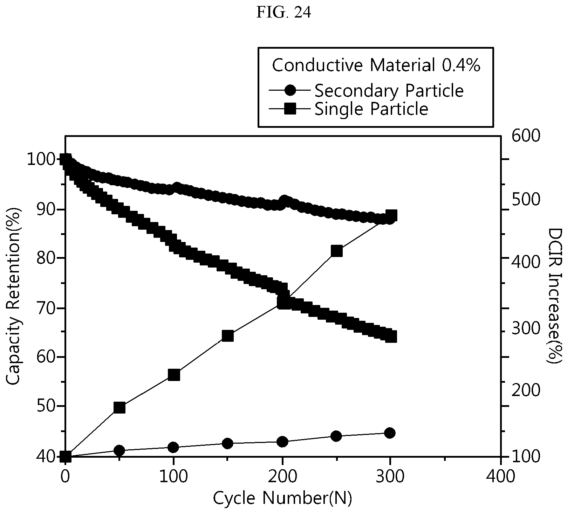

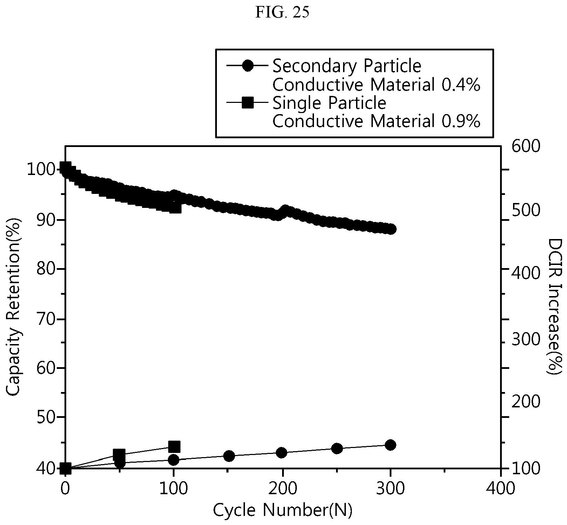

FIGS. 23 to 26 are graphs showing sheet resistance and high-temperature life characteristics for each conductive material ratio when single particles or pseudo-single particles are applied as the positive electrode active material.

Through the graphs, it may be understood that when a single particle or pseudo-single particle is applied as the positive electrode active material, the usage amount of conductive material should increase compared to the case of applying an existing positive electrode active material in the form of a secondary particle.

However, when the content of carbon nanotube is increased to 0.9 wt% or more, aggregation occurs in the positive electrode slurry, resulting in an increase in viscosity, and thus coating properties deteriorate. Therefore, in order to implement smooth coating properties, the viscosity of the positive electrode slurry must be lowered by reducing the solid content in the positive electrode slurry. However, when the solid content in the positive electrode slurry decreases, the content of active material decreases and the capacity characteristics deteriorate.

As a result of repeated research to solve this problem, the inventors of the present disclosure have found that when a carbon nanotube with a BET specific surface area of 300 $m^2/g$ to 500 $m^2/g$ is applied as a conductive material together with a positive electrode active material, which is a single particle-based active material particle, sufficient electrical conductivity can be secured with only a relatively small amount of carbon nanotube, and accordingly, the slurry viscosity can be maintained low even when the solid content of the positive electrode slurry is formed as high as 70 wt% to 80 wt%.

Specifically, the carbon nanotube used in the present disclosure may be a multi-wall carbon nanotube having a BET specific surface area of 300 $m^2/g$ to 500 $m^2/g$, preferably 300 $m^2/g$ to 450 $m^2/g$. When the BET specific surface area satisfies the above range, sufficient electrical conductivity may be secured even with a small amount of carbon nanotube.

In addition, the carbon nanotube may be a multi-wall carbon nanotube having a wall number of 2 to 8, preferably 2 to 6, more preferably 3 to 6.

In addition, the carbon nanotube may have a diameter of 1 nm to 8 nm, preferably 3 nm to 8 nm, more preferably 3 nm to 6 nm.

The carbon nanotube may be included in an amount of 0.7 wt% or less, preferably 0.3 wt% to 0.7 wt%, more preferably 0.4 wt% to 0.6 wt%, based on the total weight of the positive electrode active material layer. When the content of the carbon nanotube satisfies the above range, sufficient electrical conductivity may be achieved, and the solid content in the positive electrode slurry may be maintained high, so that the content of the positive electrode active material may be high in the positive electrode active material layer and, as a result, excellent capacity characteristics may be implemented.

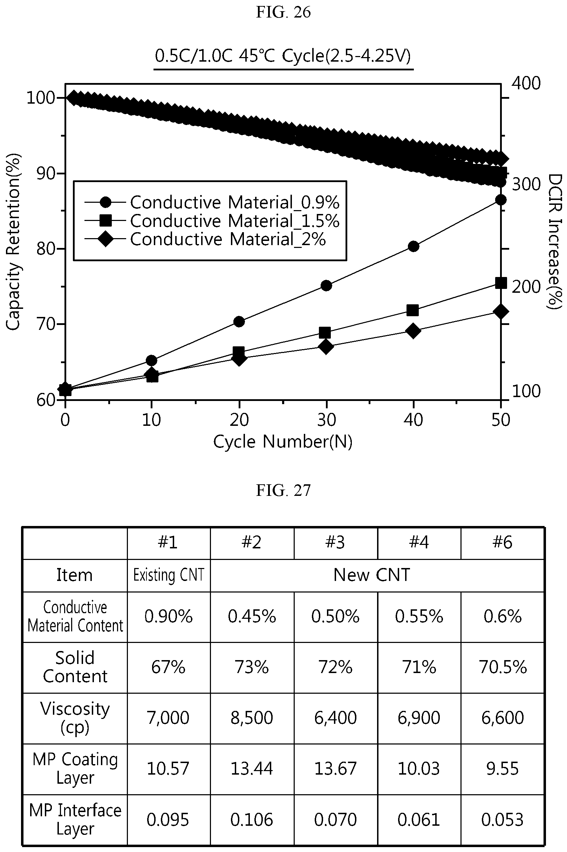

The table shown in FIG. 27 comparatively shows the solid content and viscosity of the positive electrode slurry and the resistance values at the MP coating layer and MP interface layer in the case where a carbon nanotube (new CNT) having a BET specific surface area of 300 $m^2/g$ to 500 $m^2/g$ is applied and the case where a carbon nanotube (existing CNT) having a BET of 200 $m^2/g$ or more and less than 300 $m^2/g$ is applied. Through the table, it may be found that when the new CNT is applied, the positive electrode slurry has a lower viscosity and excellent electrical conductivity even when the solid content of the positive electrode slurry is higher than that of the conventional CNT.

The binder serves to improve the attachment among the particles of the positive electrode active material and the adhesion between the positive electrode active material and the positive electrode current collector. Specific examples of the binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, which may be used alone or as a mixture. The binder may be included in an amount of 1 wt% to 30 wt%, preferably 1 wt% to 20 wt%, more preferably 1 wt% to 10 wt%, based on the total weight of the positive electrode active material layer.

Another aspect of the present disclosure relates to an electrode assembly including the positive electrode, and a battery including the electrode assembly. The electrode assembly includes a negative electrode and a positive electrode, and the positive electrode has the above-described characteristics.

In the electrode assembly, for example, a separator may be stacked to be interposed between the negative electrode and the positive electrode to form a stacked or stacked/folded structure, or may be wound to form a jelly-roll structure. In addition, when the jelly-roll structure is formed, a separator may be additionally placed on the outer side in order to prevent the negative electrode and the positive electrode from contacting each other.

The negative electrode includes a negative electrode current collector; and a negative electrode active material layer formed on at least one side surface of the negative electrode current collector. The negative electrode may have a structure in which a negative electrode active material layer is formed on one surface or both surfaces of a long sheet-shaped negative electrode current collector, and the negative electrode active material layer may include a negative electrode active material, a conductive material, and a binder.

Specifically, the negative electrode may be manufactured by coating a negative electrode slurry, which is prepared by dispersing a negative electrode active material, a conductive material and a binder in a solvent such as dimethyl sulfoxide (DMSO), isopropyl alcohol, N-methylpyrrolidone (NMP), acetone, or water, on one surface or both surfaces of a long sheet-shaped negative electrode current collector, removing the solvent of the negative electrode slurry through a drying process, and then roll-pressing. When the negative electrode slurry is coated, a negative electrode having an uncoated portion may be manufactured by not applying the negative electrode slurry to a partial area of the negative electrode current collector, for example, one end of the negative electrode current collector.

As the negative electrode active material, a compound capable of reversible intercalation and de-intercalation of lithium may be used. Specific examples of the negative electrode active material include carbonaceous materials such as artificial graphite, natural graphite, graphitized carbon fiber, or amorphous carbon; silicon-based materials such as Si, Si-Me alloy (where Me is at least one selected from the group consisting of Al, Sn, Mg, Cu, Fe, Pb, Zn, Mn, Cr, Ti, and Ni), $SiO_y$ (where $0<y<2$), or Si-C composites; lithium metal thin film; metal materials capable of being alloyed with lithium, such as Sn or Al; and the like, which may be used alone or as a mixture.

In the present disclosure, the negative electrode may include a silicon-based negative electrode active material. The silicon-based negative electrode active material may be a Si, Si-Me alloy (where Me is one selected from the group consisting of Al, Sn, Mg, Cu, Fe, Pb, Zn, Mn, Cr, Ti, and Ni), $SiO_y$ (here, $0<y<2$), Si-C composites, or a combination thereof, and may be preferably $SiO_y$ (here, $0<y<2$). Since the silicon-based negative electrode active material has a high theoretical capacity, capacity characteristics may be improved when the silicon-based negative electrode active material is included.

The silicon-based negative electrode active material may be doped with $M^b$ metal, and in this case, the $M^b$ metal may be a Group 1 metal element or a Group 2 metal element, and specifically, may be Li, Mg, or the like. Specifically, the silicon-based negative electrode active material may be Si, $SiO_y$ (here, $0<y<2$), Si-C composites, or the like, doped with $M^b$ metal. In the case of the metal-doped silicon-based negative electrode active material, the active material capacity is somewhat lowered due to the doping element, but high energy density may be realized due to its high efficiency.

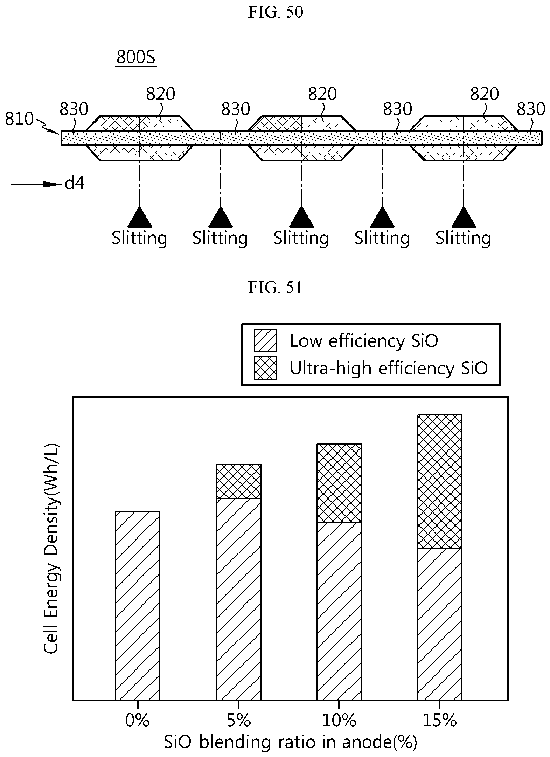

FIG. 51 is a graph showing the change in energy density depending on the content of a silicon-based negative electrode active material and the presence or absence of doping of the silicon-based negative electrode active material, in a battery using a mixture of a silicon-based negative electrode active material and a carbon-based negative electrode active material as a negative electrode active material.

In FIG. 51, low efficiency SiO refers to un-doped SiO, and ultra-high efficiency SiO refers to Mg/Li-doped SiO. Through FIG. 51, it may be found that the energy density improves as the content of the silicon-based negative electrode active material among the total negative electrode active materials increases. In addition, it may be found that as the ratio of the doped silicon-based negative electrode active material among the silicon-based negative electrode active materials increases, the effect of improving the energy density becomes better.

The silicon-based negative electrode active material may further include a carbon coating layer on the particle surface. At this time, the carbon coating amount may be 20 wt% or less, preferably 1 wt% to 20 wt%, based on the total weight of the silicon-based negative electrode active material. The carbon coating layer may be formed through a method such as dry coating, wet coating, chemical vapor deposition (CVD), physical vapor deposition (PVD), or atomic layer deposition (ALD).

In one embodiment of the present disclosure, the silicon-based negative electrode active material may have a capacity of 1000 mAh/g to 4000 mAh/g, and an initial efficiency of about 60% to 95%.

In another embodiment of the present disclosure, $D_{50}$ of the silicon-based negative electrode active material may be 3 um to 8 um, and $D_{min}$ to $D_{max}$ may be included in the range of 0.5 um to 30 um.

The negative electrode, if necessary, may further include a carbon-based negative electrode active material as a negative electrode active material. The carbon-based negative electrode active material may be, for example, artificial graphite, natural graphite, graphitized carbon fiber, amorphous carbon, soft carbon, hard carbon, or the like, but is not limited thereto.

When using a mixture of the silicon-based negative electrode active material and the carbon-based negative electrode active material as the negative electrode active material, the mixing ratio of the silicon-based negative electrode active material and the carbon-based negative electrode active material may be 1:99 to 20:80, preferably 1:99 to 15:85, more preferably 1:99 to 10:90, in weight ratio.

The negative electrode active material may be included in an amount of 80 wt% to 99 wt%, preferably 85 wt% to 99 wt%, more preferably 90 wt% to 99 wt%, based on the total weight of the negative electrode active material layer.

If necessary, the negative electrode active material may further include at least one selected from lithium metal and metal materials capable of alloying with lithium, such as Sn or Al.

As the negative electrode current collector, negative electrode current collectors generally used in the art may be used, and, for example, copper, stainless steel, aluminum, nickel, titanium, calcined carbon; copper or stainless steel surface-treated with carbon, nickel, titanium, silver, etc.; aluminum-cadmium alloy; and the like may be used. The negative electrode current collector may typically have a thickness of 3 μm to 500 μm, and, like the positive electrode current collector, fine irregularities may be formed on the surface of the current collector to enhance the bonding force of the negative electrode active material. For example, the negative electrode current collector may be used in various forms such as films, sheets, foils, nets, porous materials, foams, or nonwoven fabrics.

The conductive material is used to impart conductivity to the negative electrode, and any material that has electronic conductivity without causing chemical change inside the battery may be used without particular limitations. Specific examples of the conductive material include graphite such as natural graphite or artificial graphite; carbon-based materials such as carbon black, acetylene black, Ketjen black, channel black, furnace black, lamp black, thermal black, carbon fiber, or carbon nanotube; metal powders or metal fibers such as copper, nickel, aluminum, or silver; conductive whiskers such as zinc oxide or potassium titanate; conductive metal oxides such as titanium oxide; and conductive polymers such as polyphenylene derivatives, which may be used alone or as a mixture. The conductive material may be typically included in an amount of 1 wt% to 30 wt%, preferably 1 wt% to 20 wt%, more preferably 1 wt% to 10 wt%, based on the total weight of the negative electrode active material layer.

The binder serves to improve the attachment among the particles of the negative electrode active material and the adhesion between the negative electrode active material and the negative electrode current collector. Specific examples of the binder include polyvinylidene fluoride (PVDF), vinylidene fluoride-hexafluoropropylene copolymer (PVDF-co-HFP), polyvinyl alcohol, polyacrylonitrile, and carboxymethyl cellulose. (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated- EPDM, styrene butadiene rubber (SBR), fluoro rubber, or various copolymers thereof, and the like, which may be used alone or as a mixture. The binder may be included in an amount of 1 wt% to 30 wt%, preferably 1 wt% to 20 wt%, more preferably 1 wt% to 10 wt%, based on the total weight of the negative electrode active material layer.

The electrode assembly further includes a separator, and the separator is disposed in the electrode assembly in a manner interposed between the negative electrode and the positive electrode. The separator separates the negative electrode from the positive electrode and provides a path for lithium ion movement. Any material used as a separator in a lithium battery may be used without particular limitations.

The separator may use a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers thereof used. In addition, conventional porous non-woven fabrics, for example, non-woven fabrics made of high melting point glass fibers, polyethylene terephthalate fibers, or the like may be used. In addition, a coated separator containing a ceramic component or a polymer material may be used to secure heat resistance or mechanical strength.

Another aspect of the present disclosure relates to a battery including the electrode assembly. The battery includes a battery case in which the electrode assembly and an electrolyte are accommodated together. As for the battery case, any case commonly used in the art such as a pouch type or a metal can type may be selected without particular limitation.

As the electrolyte used in the present disclosure, various electrolytes usable in lithium batteries, such as organic liquid electrolyte, inorganic liquid electrolyte, solid polymer electrolyte, gel polymer electrolyte, inorganic solid electrolyte, or molten inorganic electrolyte, may be used, and the type is not particularly limited.

Specifically, the electrolyte may include an organic solvent and a lithium salt.

The organic solvent may use any material that may serve as a medium through which ions involved in the electrochemical reaction of the battery may move without particular limitation. Specifically, as the organic solvent, ester-based solvents such as methyl acetate, ethyl acetate, γ-butyrolactone, or ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methylethyl carbonate (MEC), ethylmethyl carbonate (EMC), ethylene carbonate (EC) or propylene carbonate (PC); alcohol-based solvents such as ethyl alcohol or isopropyl alcohol; nitriles such as R-CN (R is a C2 to C20 straight-chain, branched or cyclic hydrocarbon group, and may contain a double-bonded aromatic ring or an ether bond); amides such as dimethylformamide; dioxolanes such as 1,3-dioxolane; or sulfolanes may be used. Among them, carbonate-based solvents are preferred, and a mixture of cyclic carbonates (e.g., ethylene carbonate or propylene carbonate) having high ionic conductivity and high permittivity capable of increasing the charge and discharge performance of the battery and low-viscosity linear carbonate-based compound (e.g., ethyl methyl carbonate, dimethyl carbonate or diethyl carbonate) is more preferred.

As the lithium salt, any compound capable of providing lithium ions used in a lithium battery may be used without particular limitation. Specifically, $LiPF_6$, $LiClO_4$, $LiAsF_6$, $LiBF_4$, $LiSbF_6$, $LiAlO_4$, $LiAlCh$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$ or the like may be used as the lithium salt. The concentration of the lithium salt is preferably within the range of 0.1M to 5.0M, preferably 0.1M to 3.0M. When the concentration of the lithium salt is within the above range, the electrolyte has appropriate conductivity and viscosity, so it may exhibit excellent electrolyte performance, and lithium ions may move effectively.

In addition to the components of the electrolyte, the electrolyte may additionally include additives for the purpose of improving the lifespan characteristics of the battery, suppressing the decrease in battery capacity, and improving the discharge capacity of the battery. For example, haloalkylene carbonate-based compounds such as difluoroethylene carbonate, pyridine, triethylphosphite, triethanolamine, cyclic ether, ethylene diamine, n-glyme, hexamethyl phosphate triamid, nitrobenzene derivatives, sulfur, quinone imine dyes, N-substituted oxazolidinones, N,N-substituted imidazolidines, ethylene glycol dialkyl ethers, ammonium salts, pyrroles, 2-methoxy ethanol, aluminum trichloride or the like may be used alone or as a mixture as the additives, without being limited thereto. The additive may be included in an amount of 0.1 wt% to 10 wt%, preferably 0.1 wt% to 5 wt%, based on the total weight of the electrolyte.

In another embodiment of the present disclosure, the positive electrode may include a loading reduction portion with a smaller loading amount of the positive electrode active material, compared to an adjacent region. If the positive electrode has such a structure, the region of the positive electrode active material portion may be increased without worrying about precipitation of lithium. Accordingly, the energy density of the electrode assembly may be improved.

Recently, in order to realize high energy density and reduce cost, development is progressing in the direction of increasing the size of the battery. Depending on the size of the battery, as the energy increases, the resistance of battery should decrease. To reduce the resistance, a method of using the current collector of the electrode as an electrode tab rather than a method of attaching an electrode tab to the electrode may be used. At this time, due to the nature of the electrode manufacturing process of applying the electrode slurry on the electrode current collector, a portion in which the loading amount is reduced occurs at the boundary between the negative electrode active material portion coated with the negative electrode slurry and the negative electrode current collector. Considering the N/P ratio, there is a possibility that metallic lithium is precipitated on the positive electrode active material portion facing the portion where the loading amount is reduced. Here, the N/P ratio is a value obtained by dividing the capacity of the negative electrode, which is calculated considering the area and capacity per mass of the negative electrode, by the capacity of the positive electrode, which is obtained considering the area and capacity per mass of the positive electrode, and generally has a value of 1 or more. That is, the capacity of the negative electrode is adjusted large. For reference, if the N/P ratio is less than 1, metallic lithium is likely to be precipitated during charging and discharging, which causes rapid deterioration in safety of the battery during high rate charging and discharging. In other words, the N/P ratio has a significant effect on the safety and capacity of the battery. Due to the risk of metal lithium precipitation as described above, the positive electrode active material portion cannot be located on the portion of the positive electrode facing the portion where the loading amount of the negative electrode is reduced. This causes the energy density of the battery not to increase. Accordingly, in the present disclosure, the energy density is improved by increasing the region of the positive electrode active material portion.

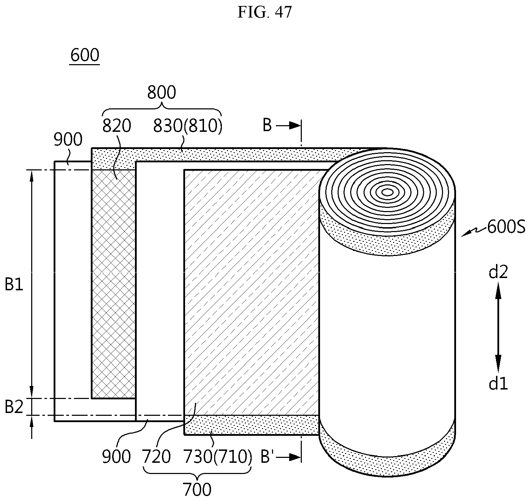

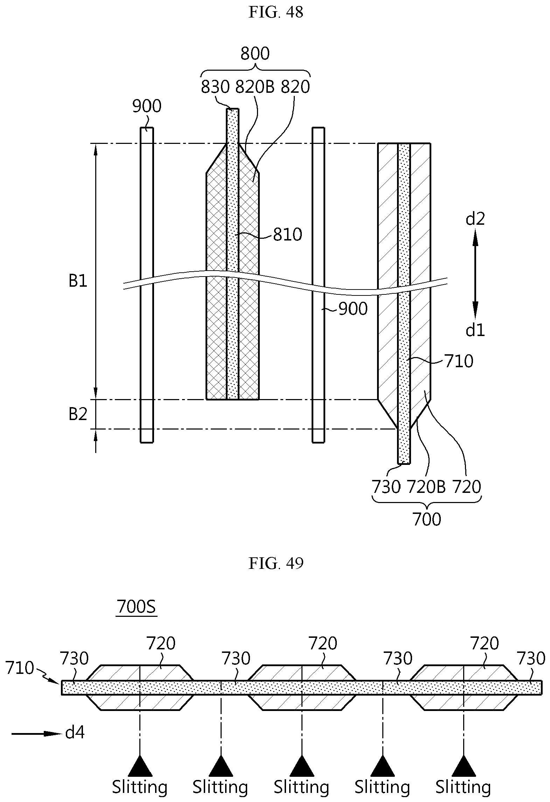

FIG. 47 is a diagram showing an electrode assembly according to an embodiment of the present disclosure, and FIG. 48 is a cross-sectional view, taken along the cutting line A-A' in FIG. 47.

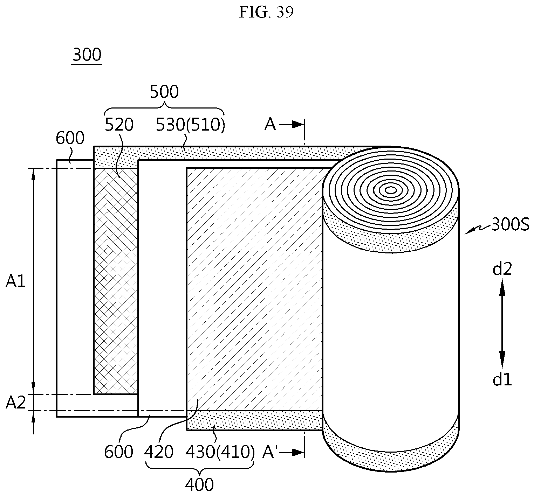

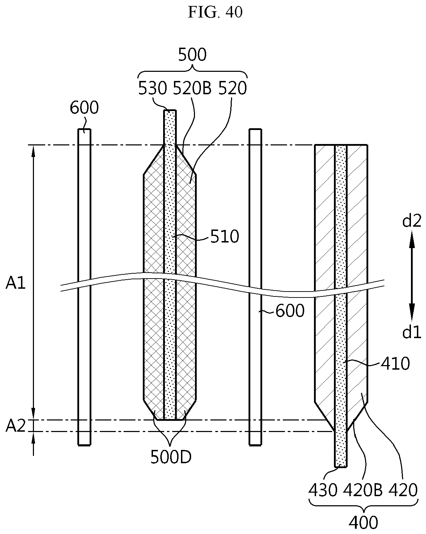

Referring to FIGS. 39 and 40, an electrode assembly 300 according to an embodiment of the present disclosure includes a negative electrode 400, a positive electrode 500, and a separator 600. The separator 600 is located between the negative electrode 400 and the positive electrode 500. The negative electrode 400, the positive electrode 500, and the separator 600 are wound together to form a jelly-roll structure 300S. Here, the jelly-roll structure 300S refers to a structure formed by winding the negative electrode 400, the positive electrode 500, and the separator 600. In addition, when the jelly-roll structure 300S is formed, it is preferable that a separator 600 is additionally disposed on the outer side in order to prevent the negative electrode 400 and the positive electrode 500 from contacting each other.

The negative electrode 400 includes a negative electrode current collector 410 and a negative electrode active material portion 420 formed by coating a negative electrode active material on the negative electrode current collector 410. In particular, as shown in the drawings, the negative electrode active material may be coated on both surfaces of the negative electrode current collector 410 to form the negative electrode active material portion 420. In addition, in the negative electrode current collector 410, a negative electrode uncoated portion 430 to which the negative electrode active material is not applied extends in the first direction d1. The negative electrode uncoated portion 430 extends along one end of the wound negative electrode 400. In addition, the negative electrode uncoated portion 430 extends beyond the separator 600 in the first direction d1. Accordingly, the negative electrode uncoated portion 430 may be exposed at one end in the first direction of the jelly-roll structure 300S.

The positive electrode 500 includes a positive electrode current collector 510 and a positive electrode active material portion 520 formed by coating a positive electrode active material on the positive electrode current collector 510. In particular, as shown in the drawings, the positive electrode active material may be coated on both surfaces of the positive electrode current collector 510 to form the positive electrode active material portion 520. Also, in the positive electrode current collector 510, a positive electrode uncoated portion 530 to which the positive electrode active material is not applied extends in the second direction d2. The positive electrode uncoated portion 530 extends along one end of the wound positive electrode 500. In addition, the positive electrode uncoated portion 530 extends beyond the separator 600 in the second direction d2. Accordingly, the positive electrode uncoated portion 530 may be exposed at one end in the second direction of the jelly-roll structure 300S.

Here, first direction d1 and second direction d2 are directions opposite to each other. Also, the first direction d1 and the second direction d2 may be directions parallel to the height direction of the jelly-roll structure 300S.

The electrode assembly 300 according to this embodiment has a structure in which a separate electrode tab is not attached, but the negative electrode uncoated portion 430 of the negative electrode current collector 410 and the positive electrode uncoated portion 530 of the positive electrode current collector 510 themselves are used as electrode tabs in order to reduce resistance.

Although not shown in the drawings, the negative electrode uncoated portion 430 and/or the positive electrode uncoated portion 530 may have substantially the same structure of the uncoated portion of the electrode described above.

In one embodiment, the positive electrode active material portion 520 includes a loading reduction portion 500D having a smaller loading amount of positive electrode active material than an adjacent area, and the loading reduction portion 500D is located at one end in the first direction d1 of the positive electrode 500. Also, more specifically, in the loading reduction portion 500D, the loading amount of the positive electrode active material may gradually decrease in the first direction d1.

Here, the loading amount means the amount of active material applied per unit area. In a portion having a large loading amount, a lot of negative electrode active material or positive electrode active material is applied to the unit area, so the negative electrode active material portion or the positive electrode active material portion may have a relatively greater thickness. In a portion having a small loading amount, a small amount of negative electrode active material or positive electrode active material is applied to the unit area, so the negative electrode active material portion or the positive electrode active material portion may have a relatively smaller thickness.

The active material portion may be formed by applying a slurry containing an active material. In this process, a boundary portion having a gradually decreasing loading amount may be formed between the uncoated portion and the active material portion.

Specifically, the negative electrode active material portion 420 may include a negative electrode boundary portion 420B forming a boundary between the negative electrode active material portion 420 and the negative electrode uncoated portion 430. The loading amount of the negative electrode boundary portion 420B may decrease in a direction toward the negative electrode uncoated portion 430.

Similarly, the positive electrode active material portion 520 may include a positive electrode boundary portion 520B forming a boundary between the positive electrode active material portion 520 and the positive electrode uncoated portion 530. The loading amount of the positive electrode boundary portion 520B may decrease in a direction toward the positive electrode uncoated portion 530.

The negative electrode boundary portion 420B or the positive electrode boundary portion 520B in which the loading amount gradually decreases as above is naturally generated in the process of applying the slurry containing the active material to the negative electrode current collector 410 or the positive electrode current collector 510.

In this case, in a region corresponding to the positive electrode boundary portion 520B, based on a direction perpendicular to the second direction d2, the amount of the positive electrode active material may be smaller than the amount of the negative electrode active material. Since the N/P ratio has a value greater than 1, the problem of precipitation of metallic lithium does not occur.

However, there is a problem in a region corresponding to the negative electrode boundary portion 420B. In the region corresponding to the negative electrode boundary portion 420B, based on a direction perpendicular to the first direction d1, the amount of the negative electrode active material may be smaller than the amount of the positive electrode active material. This may cause a problem of precipitation of metallic lithium because the N/P ratio has a value smaller than 1.

Accordingly, in this embodiment, the loading reduction portion 500D is provided on the positive electrode 500, and the negative electrode active material portion 420 may be located in a portion corresponding to the loading reduction portion 500D based on a direction perpendicular to the first direction d1. More specifically, the negative electrode boundary portion 420B may be located at a portion corresponding to the loading reduction portion 500D based on a direction perpendicular to the first direction d1.

The loading reduction portion 500D having a smaller loading amount of positive electrode active material than adjacent areas is provided at a position corresponding to the negative electrode boundary portion 420B having a gradually decreasing loading amount, so that the region where the positive electrode active material is applied may be increased without worrying about lithium precipitation. In particular, the loading amount of the positive electrode active material may gradually decrease in the loading reduction portion 500D along the first direction d1, corresponding to the shape of the negative electrode boundary portion 420B in which the loading amount gradually decreases in a direction toward the negative electrode uncoated portion 430. Therefore, it is possible to maintain a high N/P ratio of the negative electrode 400 and the positive electrode 500 in the region where the negative electrode boundary portion 420B is formed, thereby preventing lithium precipitation.

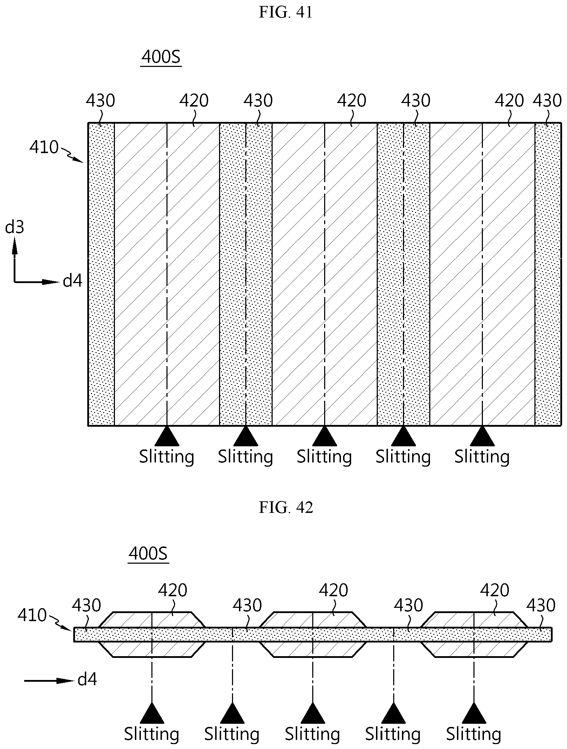

Hereinafter, a method for manufacturing an electrode assembly according to an embodiment of the present disclosure will be described in detail with reference to FIGS. 41 to 46.

FIGS. 41 and 42 are diagrams illustrating a process of manufacturing a negative electrode according to an embodiment of the present disclosure. Specifically, FIG. 41 is a plan view showing the negative electrode sheet from above, and FIG. 42 is a front view showing the negative electrode sheet of FIG. 41 from the front.

Referring to FIGS. 41 and 42, in the method for manufacturing an electrode assembly according to an embodiment of the present disclosure includes a step of manufacturing a negative electrode sheet 400S so that a negative electrode active material portion 420 coated with a negative electrode active material and a negative electrode uncoated portion 430 not coated with a negative electrode active material are alternately located on a negative electrode current collector 410.

Specifically, the negative electrode active material portion 420 may be formed by applying the negative electrode active material to extend along the third direction d3. In addition, a plurality of negative electrode active material portions 420 may be located to be spaced apart along the fourth direction d4 by spacing the coated portions along the fourth direction d4 perpendicular to the third direction d3. That is, the coating process may be performed so that the negative electrode uncoated portion 430 is positioned between the plurality of negative electrode active material portions 420.

Here, the third direction d3 and the fourth direction d4 are directions for explanation based on the negative electrode sheet 400S, and are directions unrelated to the first direction d1 and the second direction d2 in the jelly-roll structure 300S described above.

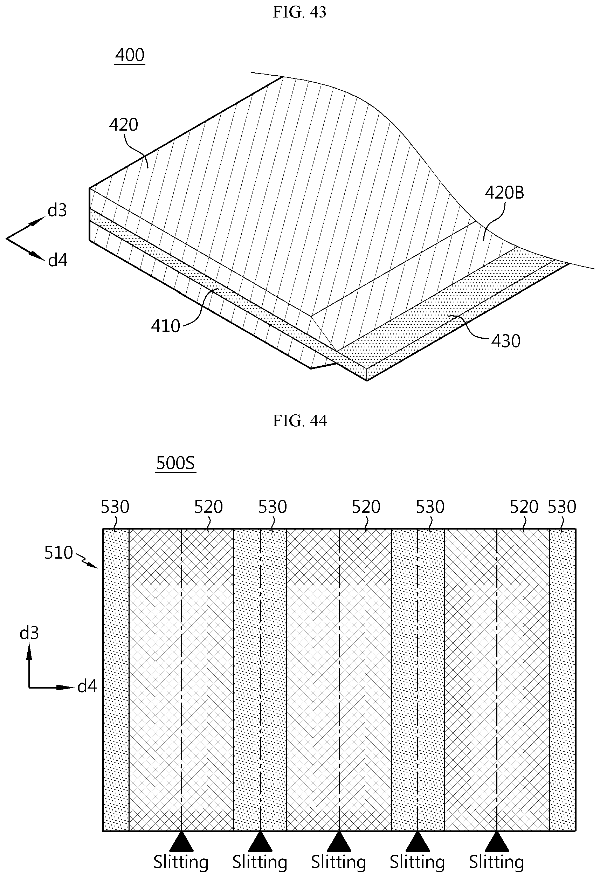

After that, a step of manufacturing a negative electrode 400 by slitting the negative electrode uncoated portion 430 and the negative electrode active material portion 420 may be followed. FIG. 43 is a perspective view showing a negative electrode according to an embodiment of the present disclosure.

Referring to FIGS. 41 to 43, slitting may be performed in a direction parallel to the third direction d3 for the negative electrode uncoated portion 430 and the negative electrode active material portion 420, respectively, as indicated by dotted lines in FIGS. 41 and 42. Accordingly, several negative electrodes 400 as shown in FIG. 43 may be manufactured from the negative electrode sheet 400S. That is, the negative electrode 400 of FIG. 43 corresponds to one of several negative electrodes manufactured by slitting the negative electrode sheet 400S of FIGS. 41 and 42. By slitting the negative electrode uncoated portion 430 and the negative electrode active material portion 420 of the negative electrode sheet 400S, respectively, the negative electrode 400 in which the negative electrode uncoated portion 430 extends at one side may be manufactured.

When forming the negative electrode active material portion 420, a slurry containing the negative electrode active material may be applied on the negative electrode current collector 410. In the process of applying the slurry, a negative electrode boundary portion 420B having a loading amount decreasing in a direction toward the negative electrode uncoated portion 430 may be formed at the boundary between the negative electrode active material portion 420 and the negative electrode uncoated portion 430.

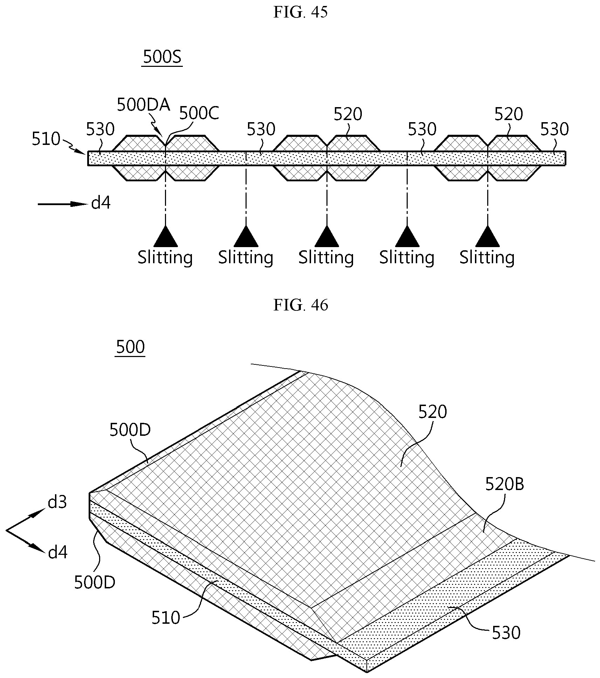

FIGS. 44 and 45 are diagrams showing a process of manufacturing a positive electrode according to an embodiment of the present disclosure. Specifically, FIG. 44 is a plan view showing the positive electrode sheet from above, and FIG. 45 is a front view showing the positive electrode sheet of FIG. 44 from the front.

Referring to FIGS. 44 and 45, the method for manufacturing an electrode assembly according to an embodiment of the present disclosure includes a step of manufacturing a positive electrode sheet 500S so that a positive electrode active material portion 520 coated with a positive electrode active material and a positive electrode uncoated portion 530 not coated with a positive electrode active material are alternately located on the positive electrode current collector 510.

Specifically, the positive electrode active material portion 520 may be formed by applying the positive electrode active material to extend along the third direction d3. In addition, a plurality of positive electrode active material portions 520 may be located to be spaced apart by adjusting the coating interval along the fourth direction d4 perpendicular to the third direction d3. That is, the coating process may be performed so that the positive electrode uncoated portion 530 is located between the plurality of positive electrode active material portions 520.

Here, third direction d3 and fourth direction d4 are directions for description based on the positive electrode sheet 500S, and are directions unrelated to the first direction d1 and the second direction d2 in the jelly-roll structure 300S described above.

After that, a step of manufacturing a positive electrode 500 by slitting the positive electrode uncoated portion 530 and the positive electrode active material portion 520 may be followed. FIG. 46 is a perspective view showing a positive electrode 500 according to an embodiment of the present disclosure.

Referring to FIGS. 44 to 46, slitting may be performed in a direction parallel to the third direction d3 for the positive electrode uncoated portion 530 and the positive electrode active material portion 520, respectively, as indicated by dotted lines in FIGS. 44 and 45. Accordingly, several positive electrodes 500 as shown in FIG. 46 may be manufactured from the positive electrode sheet 500S. That is, the positive electrode 500 of FIG. 46 corresponds to one of several positive electrodes manufactured by slitting the positive electrode sheet 500S of FIGS. 44 and 45. By slitting the positive electrode uncoated portion 530 and the positive electrode active material portion 520 of the positive electrode sheet 500S, respectively, the positive electrode 500 in which the positive electrode uncoated portion 530 extends at one side may be manufactured.

When forming the positive electrode active material portion 520, a slurry containing the positive electrode active material may be applied on the positive electrode current collector 510. In the process of applying the slurry, a positive electrode boundary portion 520B having a loading amount decreasing in a direction toward the positive electrode uncoated portion 530 may be formed at the boundary between the positive electrode active material portion 520 and the positive electrode uncoated portion 530.

Referring to FIGS. 39, 43 and 46 together, a step of forming a jelly-roll structure 300S by winding the negative electrode 400 and the positive electrode 500 together with the separator 600 may be followed. At this time, in the jelly-roll structure 300S, the negative electrode uncoated portion 430 may extend beyond the separator 600 in a first direction d1, and the positive electrode uncoated portion 530 may extend beyond the separator 600 in a second direction d2 opposite to the first direction d1.

Referring to FIGS. 44 to 46 again, in the method for manufacturing an electrode assembly according to an embodiment of the present disclosure, the positive electrode sheet 500S includes a loading reduction area 500DA in which the loading amount of the positive electrode active material is smaller than that of the adjacent area. There is no particular limitation in the method of forming the loading reduction area 500DA, and for example, it may be formed by adjusting the degree of coating of the slurry.

In the step of manufacturing the positive electrode 500, the loading reduction area 500DA of the positive electrode active material portion 520 is slit. The slitted loading reduction area 500DA forms a loading reduction portion 500D having a smaller loading amount of the positive electrode active material than the adjacent area in the jelly-roll structure 300S shown in FIGS. 39 and 40.

Specifically, a loading reduction area 500DA having a smaller loading amount of the positive electrode active material than the adjacent area is formed in the positive electrode active material portion 520 formed on the positive electrode sheet 500S. As shown in FIG. 45, the loading reduction area 500DA may be formed in the center of the positive electrode active material portion 520. Meanwhile, the loading reduction area 500DA may be configured such that the loading amount of the positive electrode active material gradually decreases toward the center portion 500C of the loading reduction area 500DA, and in the step of manufacturing the positive electrode 500, the loading reduction portion 500D according to this embodiment may be provided by slitting the center portion 500C of the loading reduction area 500DA.

That is, in applying the slurry containing a positive electrode active material, by forming the loading reduction area 500DA and slitting the center portion 500C of the loading reduction area 500DA, several positive electrodes 500 having the loading reduction portion 500D may be manufactured.

Referring to FIG. 46, the loading reduction portion 500D may be provided at one end of the manufactured positive electrode 500, and the positive electrode uncoated portion 530 may be provided at the other end of the positive electrode 500 opposite to the one end.

Referring to FIGS. 39 and 40, when the positive electrode 500 is wound to form a jelly-roll structure 300S, the loading reduction portion 500D may be located at one end in the first direction d1 of the positive electrode 500, and the positive electrode uncoated portion 530 may be located at one end in the second direction d2 of the positive electrode 500.

In addition, as the center portion 500C of the loading reduction area 500DA is slitted, the loading amount of the positive electrode active material in the loading reduction portion 500D may gradually decrease along the first direction d1.

In addition, in the jelly-roll structure 300S, the negative electrode active material portion 420 may be located at a portion corresponding to the loading reduction portion 500D based on a direction perpendicular to the first direction d1. More specifically, in the jelly-roll structure 300S, the negative electrode boundary portion 420B may be located at a portion corresponding to the loading reduction portion 500D based on a direction perpendicular to the first direction d1.

The corresponding positional relationship between the loading reduction portion 500D and the negative electrode boundary portion 420B has already been described above and thus will not be described again.

Hereinafter, with reference to FIGS. 47 to 50, an electrode assembly according to a comparative example will be described, and advantages of the electrode assembly according to this embodiment compared to the electrode assembly according to the comparative example will be described.

FIG. 47 is a diagram showing an electrode assembly according to a comparative example. FIG. 48 is a cross-sectional view, taken along the cutting line B-B' in FIG. 47.

Referring to FIGS. 47 and 48, the electrode assembly 600 according to the comparative example includes a negative electrode 700, a positive electrode 800 and a separator 900, and the negative electrode 700, the positive electrode 800 and the separator 900 are wound to form a jelly-roll structure 600S.

The negative electrode 700 may include a negative electrode current collector 710, a negative electrode active material portion 720, and a negative electrode uncoated portion 730. In addition, the negative electrode uncoated portion 730 may extend in the first direction d1, and the negative electrode active material portion 720 may include a negative electrode boundary portion 720B that forms a boundary between the negative electrode active material portion 720 and the negative electrode uncoated portion 730 and has a gradually decreasing loading amount.

FIG. 49 is a diagram showing a process of manufacturing a negative electrode 700 according to a comparative example.

Referring to FIG. 49, after the negative electrode sheet 700S is manufactured so that the negative electrode active material portion 720 and the negative electrode uncoated portion 730 are alternately positioned along the fourth direction d4, a plurality of negative electrodes 700 may be manufactured by slitting the negative electrode uncoated portion 730 and the negative electrode active material portion 720.

Meanwhile, referring to FIGS. 47 and 48 again, the positive electrode 800 may include a positive electrode current collector 810, a positive electrode active material portion 820, and a positive electrode uncoated portion 880. In addition, the positive electrode uncoated portion 830 may extend in the second direction d2 opposite to the first direction d1, and the positive electrode active material portion 820 may include a positive electrode boundary portion 820B that forms a boundary between the positive electrode active material portion 820 and the positive electrode uncoated portion 830 and has a gradually decreasing loading amount.

FIG. 50 is a diagram showing a process of manufacturing a positive electrode 800 according to a comparative example.

Referring to FIG. 50, after the positive electrode sheet 800S is manufactured so that the positive electrode active material portion 820 and the positive electrode uncoated portion 830 are alternately positioned along the fourth direction d4, a plurality of positive electrodes 800 may be manufactured by slitting the positive electrode uncoated portion 830 and the positive electrode active material portion 820.

After that, the negative electrode 700 and the positive electrode 800 manufactured as above may be wound together with the separator 900 to manufacture an electrode assembly 600 according to the comparative example.

That is, the electrode assembly 600 according to the comparative example may have a structure similar to that of the electrode assembly 300 according to this embodiment, except for the loading reduction portion 500D (see FIG. 48).

Referring to FIGS. 47 and 48, in the case of the electrode assembly 600 according to the comparative example, the positive electrode active material portion 820 cannot be located in a portion corresponding to the negative electrode boundary portion 720B, based on a direction perpendicular to the first direction d1. If the positive electrode active material portion 820 extends to a portion corresponding to the negative electrode boundary portion 720B, the corresponding portion has a low N/P ratio value and is highly likely to precipitate metallic lithium. Therefore, in order to prevent lithium precipitation, the length of the positive electrode active material portion 820 must be limited. That is, the positive electrode active material portion 820 can be formed only in the region B1 shown in the drawing, and the positive electrode active material portion 820 cannot be formed in the region B2. This results in reducing the length of the positive electrode active material portion 820 due to the negative electrode boundary portion 720B.

Meanwhile, referring to FIGS. 39 and 40, in the case of the electrode assembly 300 according to this embodiment, based on the direction perpendicular to the first direction d1, the positive electrode active material portion 520, particularly the loading reduction portion 500D, may be located in a portion corresponding to the negative electrode boundary portion 420B. Since the loading reduction portion 500D having a smaller loading amount of the positive electrode active material than the adjacent area is provided at a position corresponding to the negative electrode boundary portion 420B, the N/P ratio in the corresponding portion may be maintained high and lithium precipitation may be prevented. Accordingly, the positive electrode active material portion 520 may be formed as much as the region A1, and the region A2 in which the positive electrode active material portion 520 cannot be formed may be reduced. For example, the width of the positive electrode 500 in the height direction compared to the width of the negative electrode 400 in the height direction may be increased to 98% or more.

If the region A1 of FIGS. 39 and 40 is compared with the region B1 of FIGS. 47 and 48, in the electrode assembly 300 according to this embodiment, the length of the positive electrode active material portion may be increased as much as the loading reduction portion 500D, and thus a higher energy density may be provided in a limited space compared to the electrode assembly 600 according to the comparative example.

Another aspect of the present disclosure relates to a cylindrical battery, which includes a j elly-roll type electrode assembly having a structure in which a positive electrode, a negative electrode, and a separator interposed between the positive electrode and the negative electrode are wound in one direction; a cylindrical battery housing in which the electrode assembly is accommodated; and a cap plate serving as a sealing body disposed at the upper portion of the battery housing to seal the battery housing. Here, the positive electrode is prepared according to the present disclosure and includes single particle-based active material particles having an average particle diameter $D_{50}$ of 5 $\mu$m or less as the positive electrode active material. The cylindrical battery may further include an electrolyte, and the above description may be referred to for the electrolyte.

The electrode assembly may have a stack type, stack/folding type, or j elly-roll type structure as described above. In one specific embodiment of the present disclosure, in the electrode assembly, the positive electrode may have a loading reduction portion as described above.

In the case of a conventional cylindrical battery, current is concentrated on a strip-shaped electrode tab, resulting in great resistance, high heat generation, and poor current collection efficiency.

As the demand for high-capacity batteries increases with the recent development of electric vehicle technology, the development of bulky large-sized cylindrical batteries is required. In the case of a conventional small cylindrical battery generally used in the art, that is, a cylindrical battery having a form factor of 1865 or 2170, resistance or heat generation does not seriously affect battery performance because the capacity is small. However, when the specifications of the conventional small cylindrical battery are applied as they are to a large cylindrical battery, a serious problem may occur in battery safety.

As the size of the battery increases, the amount of heat and gas generated inside the battery also increases, and the temperature and pressure inside the battery rise due to such heat and gas, which may cause the battery to ignite or explode. In order to prevent this, heat and gas inside the battery must be properly discharged to the outside, and for this, the cross-sectional area of the battery, which serves as a passage for discharging heat to the outside of the battery, must increase to match the increase in volume. However, in general, since the increase in cross-sectional area does not reach the increase in volume, as the size of the battery increases, the amount of heat generated inside the battery increases, resulting in problems such as increased risk of explosion and reduced output. In addition, when rapid charging is performed at a high voltage, a large amount of heat is generated around the electrode tab for a short period of time, and the battery may ignite. Accordingly, the present disclosure proposes a cylindrical battery having a high safety while having a large volume to implement a high capacity.

In addition, since a high loading electrode to which the positive electrode active material in the form of single particle or pseudo-single particle is applied may be applied to the cylindrical battery, the initial resistance characteristics and charge/discharge efficiency of the cylindrical battery may be improved.

The cylindrical battery according to the present disclosure significantly reduces gas generation compared to the prior art by applying a positive electrode active material in the form of single particle or pseudo-single particle. Accordingly, even a large cylindrical battery having a form factor ratio of 0.4 or more may exhibit excellent safety.

The cylindrical battery according to the present disclosure may preferably be a battery having a tab-less structure that does not include an electrode tab, but is not limited thereto.

In the battery of the tab-less structure, for example, each of the positive electrode and the negative electrode includes an uncoated portion on which an active material layer is not formed, and may have a structure in which the positive electrode uncoated portion and the negative electrode uncoated portion are respectively located at the upper and lower ends of the electrode assembly, a collector plate is coupled to the positive electrode uncoated portion and the negative electrode uncoated portion, and the collector plate is connected to an electrode terminal.

When the cylindrical battery is formed in a tab-less structure as described above, since the concentration of current is less than that of the conventional battery equipped with an electrode tab, heat generation inside the battery may be effectively reduced, thereby improving the thermal safety of the battery.

Hereinafter, the present disclosure will be described in more detail through specific examples.

Example 1

A single particle type positive electrode active material $Li[Ni_{0.9}Co_{0.06}Mn_{0.03}Al_{0.01}]O_2$ having a unimodal particle size distribution with an average particle diameter $D_{50}$ of 3 $\mu$m: carbon nanotube : PVDF binder were mixed in N-methyl pyrrolidone at a weight ratio of 97.8 : 0.6 : 1.6 to prepare a positive electrode slurry. The positive electrode slurry was coated on one surface of an aluminum current collector sheet, dried at 120°C, and then rolled to prepare a positive electrode.

A negative electrode active material (graphite : SiO = 95 : 5 mixture by weight) : conductive material (super C), : styrene-butadiene rubber (SBR) : carboxymethyl cellulose (CMC) were mixed in water at a weight ratio of 96 : 2 : 1.5 : 0.5 to prepare a negative electrode slurry. The negative electrode slurry was coated on one surface of a copper current collector sheet, dried at 150°C, and then rolled to prepare a negative electrode.

A separator was interposed between the positive electrode and the negative electrode prepared as above, stacked in the order of separator/positive electrode/separator/negative electrode, and then wound to prepare a jelly-roll type electrode assembly. The electrode assembly prepared as described above was inserted into a cylindrical battery housing, and an electrolyte was injected thereto to prepare a 4680 cell.

Comparative Example 1

A 4680 cell was manufactured in the same manner as in Example 1, except that secondary particle type $Li[Ni_{0.9}Co_{0.05}Mn_{0.04}Al_{0.01}]O_2$ having a bimodal particle size distribution with a large particle average diameter $D_{50}$ of 9

$\mu$m and a small particle average diameter $D_{50}$ of 4 $\mu$m was used as the positive electrode active material.

Experimental Example 1

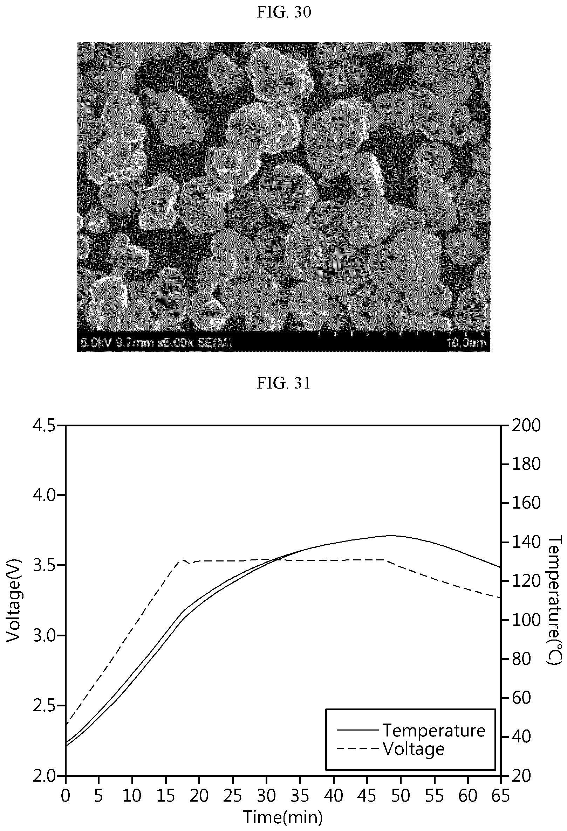

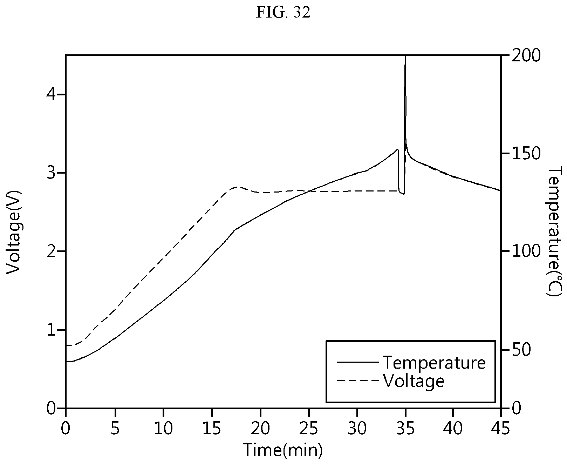

A hot box test was performed on the 4680 cells manufactured by Example 1 and Comparative Example 1.
Specifically, each of the 4680 cells manufactured by Example 1 and Comparative Example 1 was placed in a hot box chamber at room temperature, heated to 130°C at a heating rate of 5°C/min, and maintained for 30 minutes to perform a hot box evaluation, and the temperature change of the battery over time was measured. For accurate evaluation, the hot box evaluation was performed twice on the cell of Example 1. The measurement results are shown in FIGS. 31 and 32.
FIG. 31 is a graph showing a hot box test result of the 4680 cell manufactured by Example 1 of the present disclosure, and FIG. 32 is a graph showing a hot box test result of the 4680 cell manufactured by Comparative Example 1.
Through FIGS. 31 and 32, it may be found that in the case of the lithium secondary battery of Example 1 using the single particle positive electrode active material, the voltage and temperature of the battery were maintained stably until 65 minutes, whereas in the lithium secondary battery of Comparative Example 1, the temperature of the battery rapidly increased after 35 minutes.

Example 2-1

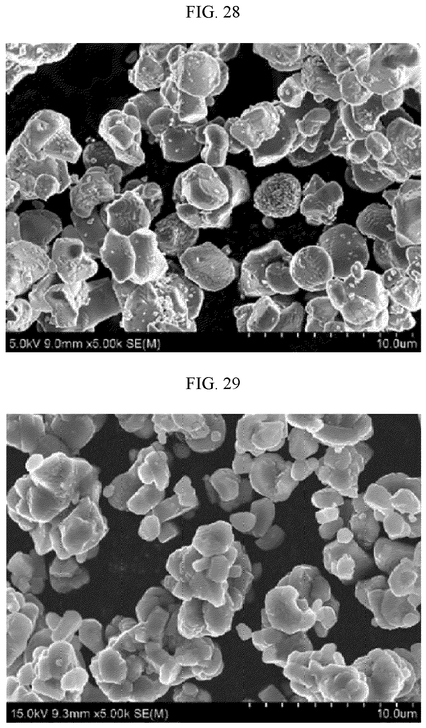

A positive electrode active material (composition: $Li[Ni_{0.9}Co_{0.06}Mn_{0.03}Al_{0.01}]O_2$, which has a unimodal particle size distribution where $D_{min}$ = 1.78 $\mu$m, $D_{50}$ = 4.23 $\mu$m, and $D_{max}$ =13.1 $\mu$m and in which single particles and pseudo-single particles were mixed was prepared. FIG. 28 shows a SEM picture of the positive electrode active material used in Example 2-1.
The positive electrode active material: carbon nanotube : PVDF binder were mixed in N-methyl pyrrolidone at a weight ratio of 97.8 : 0.6 : 1.6 to prepare a positive electrode slurry. The positive electrode slurry was coated on one surface of an aluminum current collector sheet, dried at 120°C, and then rolled to prepare a positive electrode.
A negative electrode active material (graphite : SiO = 95 : 5 mixture by weight) : conductive material (super C) : styrene-butadiene rubber (SBR) : carboxymethyl cellulose (CMC) were mixed in water at a weight ratio of 96 : 2 : 1.5 : 0.5 to prepare a negative electrode slurry. The negative electrode slurry was coated on one surface of a copper current collector sheet, dried at 150°C, and then rolled to prepare a negative electrode.
A separator was interposed between the positive electrode and the negative electrode prepared as above, stacked in the order of separator/positive electrode/separator/negative electrode, and then wound to prepare a jelly-roll type electrode assembly. The electrode assembly prepared as described above was inserted into a battery housing, and an electrolyte was injected thereto to prepare a 4680 cell.

Example 2-2

A 4680 cell was manufactured in the same manner as in Example 2-1, except that a positive electrode active material (composition: $Li[Ni_{0.9}Co_{0.06}Mn_{0.03}Al_{0.01}]O_2$, which has a unimodal particle size distribution where $D_{min}$ = 1.38 $\mu$m, $D_{50}$ = 4.69 $\mu$m, and $D_{max}$ =18.5 $\mu$m and in which single particles and pseudo-single particles were mixed was used as the positive electrode active material. FIG. 29 shows a SEM picture of the positive electrode active material used in Example 2-2.

Comparative Example 2-1

A 4680 cell was manufactured in the same manner as in Example 2-1, except that a secondary particle type positive electrode active material (composition: $Li[Ni_{0.9}Co_{0.05}Mn_{0.04}Al_{0.01}]O_2$ having a bimodal particle size distribution with a large particle average diameter $D_{50}$ of 9 $\mu$m and a small particle average diameter $D_{50}$ of 4 $\mu$m was used as the positive electrode active material.

Comparative Example 2-2

A 4680 cell was manufactured in the same manner as in Example 2-1, except that a positive electrode active material (composition: $Li[Ni_{0.9}Co_{0.06}Mn_{0.03}Al_{0.01}]O_2$, which has a unimodal particle size distribution where $D_{min}$ = 0.892 $\mu$m, $D_{50}$ = 3.02 $\mu$m, and $D_{max}$ =11 $\mu$m and in which single particles and pseudo-single particles were mixed was used as the positive electrode active material.
FIG. 30 shows a SEM picture of the positive electrode active material used in Comparative Example 2-2.

Experimental Example 2-1

A hot box test was performed on the 4680 cells manufactured by Examples 2-1 and 2-2 and Comparative Examples 2-1 and 2-2.

Specifically, each of the 4680 cells manufactured by Example 2-1 and Comparative Example 2-1 was placed in a hot box chamber at room temperature, heated up to 130°C at a heating rate of 5°C/min, and maintained for 30 minutes, and then the temperature change of the cell was measured. A case in which thermal runaway and ignition did not occur during the test was marked as Pass, and a case in which thermal runaway and/or ignition occurred was marked as Fail. Also, for the accuracy of the test, the test was performed more than twice for the cells of Examples 2-1 and 2-2.

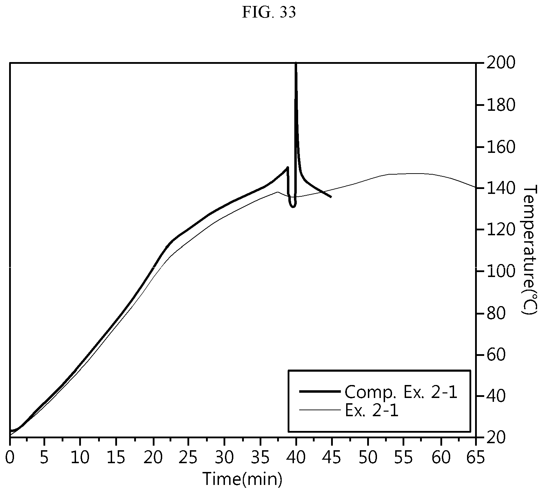

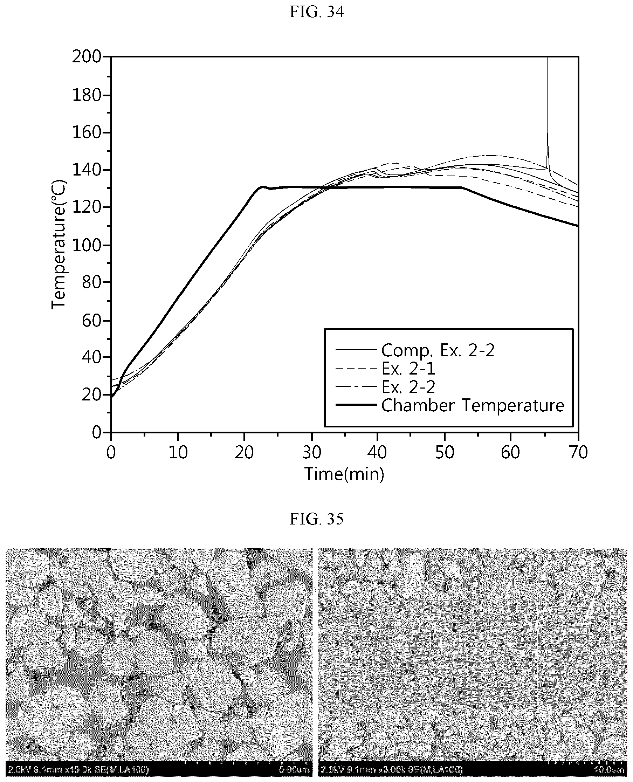

Measurement results are shown in Table 1 below and FIGS. 33 and 34. FIG. 33 is a graph showing hot box test results of Sample 1 of Example 2-1 and the 4680 cell manufactured by Comparative Example 2-1, and FIG. 34 is a graph showing hot box test results of Samples 2 and 3 of Example 2-1, Samples 1 and 2 of Example 2-2, and the 4680 cell manufactured by Comparative Example 2-2.

Table 1

|  | Sample # | Venting time (min) | Maximum temperature (°C) | Hot box test result |
|---|---|---|---|---|
| Example 2-1 | 1 | 16 | 139 | Pass |
|  | 2 | 20.9 | 141 | Pass |
|  | 3 | 23.7 | 137 | Pass |
| Example 2-2 | 1 | 16.0 | 148 | Pass |
|  | 2 | 15.8 | 147 | Pass |
| Comparative Example 2-1 | 1 | 17 | not measurable | Fail |
| Comparative Example 2-2 | 1 | 16.2 | not measurable | Fail |

Referring to Table 1 and FIGS. 33 and 34, it may be found that, in the case of the 4680 cell of Example 2-1 to which the positive electrode active material in the form of a single particle/pseudo-single particle with $D_{min}$ of 1.0 $\mu$m or more was applied, the voltage and temperature of the battery were maintained stably until 65 minutes, while in the case of the 4680 cells of Comparative Example 2-1 in which a secondary particle was applied as the positive electrode active material and Comparative Example 2-2 in which a positive electrode active material in the form of a single particle/pseudo-single particle with $D_{min}$ of less than 1.0 $\mu$m was applied, the battery temperature of the 4680 cell rapidly increased.

Experimental Example 2-2

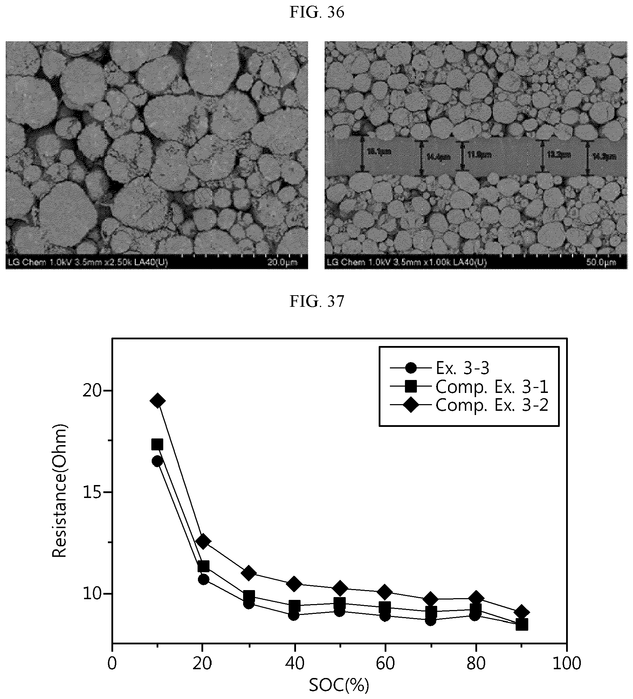

After rolling the positive electrodes manufactured in Example 2-1 and Comparative Example 2-1, in order to check the degree of breakage of the positive electrode active material particles, the positive electrode was cut with an ion milling device and the cross section was photographed with a SEM. FIG. 35 shows a cross-sectional SEM picture of the positive electrode manufactured in Example 2-1, and FIG. 36 shows a cross-sectional SEM picture of the positive electrode manufactured in Comparative Example 2-1.

Through FIGS. 35 and 36, the positive electrode of Example 2-1 has almost no particle breakage of the positive electrode active material even after rolling, whereas in the positive electrode of Comparative Example 2-2 using secondary particles, a number of cracks were observed in the particles of the positive electrode active material after rolling.

Example 3-1

A positive electrode active material powder (composition: Li[Ni$_{0.9}$Co$_{0.06}$Mn$_{0.03}$Al$_{0.01}$]O$_2$, which has a unimodal particle size distribution where $D_{min}$ = 1.78 $\mu$m, $D_{50}$ = 4.23 $\mu$m, $D_{max}$ =13.1 $\mu$m and in which single particles and pseudo-single particles were mixed, flake graphite (SFG6L), conductive material (multi-wall carbon nanotube), and PVDF binder were mixed in N-methyl pyrrolidone at a weight ratio of 96.3 : 1.5 : 0.4 : 1.8 to prepare a positive electrode slurry. The positive electrode slurry was coated on one surface of an aluminum current collector sheet, dried, and rolled at a linear pressure of 3.0 ton/cm to prepare a positive electrode. The porosity of the positive electrode active material layer of the positive electrode prepared as described above was measured, and the porosity was measured to be 17.5%.

Example 3-2

A positive electrode was manufactured in the same manner as in Example 3-1, except that the positive electrode active material, flake graphite, conductive material, and binder were mixed in a weight ratio of 97.2 : 0.6 : 0.4 : 1.8, and the porosity of the positive electrode active material layer was measured. The porosity of the positive electrode active material layer was measured to be 19%.

Example 3-3

A positive electrode was manufactured in the same manner as in Example 3-1, except that the positive electrode active material, flake graphite, conductive material, and binder were mixed in a weight ratio of 97.4 : 0.4 : 0.4 : 1.8, and the porosity of the positive electrode active material layer was measured. The porosity of the positive electrode active material layer was measured to be 20%.

Example 3-4

A positive electrode was manufactured in the same manner as in Example 3-1, except that the positive electrode active material, flake graphite, conductive material, and binder were mixed in a weight ratio of 97.6 : 0.2 : 0.4 : 1.8, and the porosity of the positive electrode active material layer was measured. The porosity of the positive electrode active material layer was measured to be 21%.

Comparative Example 3-1

A positive electrode was prepared in the same manner as in Example 3-1, except that the positive electrode slurry was prepared by mixing the positive electrode active material, conductive material, and binder in N-methyl pyrrolidone at a weight ratio of 97.8 : 0.4 : 1.8 without adding flake graphite, and the porosity of the positive electrode active material layer was measured. The porosity of the positive electrode active material layer was measured to be 24%.

Comparative Example 3-2

A positive electrode was manufactured in the same manner as in Example 3-1 except that the positive electrode active material, conductive material, and binder were mixed in N-methyl pyrrolidone at a weight ratio of 97.8 : 0.4 : 1.8 to prepare a positive electrode slurry, and rolled at a line pressure of 2.0 ton/cm without adding flake graphite, and the porosity of the positive electrode active material layer was measured. The porosity of the positive electrode active material layer was measured to be 30%.

Experimental Example 3-1 - Measurement of charge/discharge capacity and charge/discharge efficiency

Coin half-cells including the positive electrodes according to Examples 3-1 to 3-4 and Comparative Examples 3-1 and 3-2 were manufactured, charged up to 4.25V under a 0.2C current condition, and then discharged to 2.5V under a 0.2C current condition, and the charge capacity (mAh/g) and discharge capacity (mAh/g) of each coin half-cell were measured. The measurement results are shown in Table 2 below.

Table 2

| | Add amount of flake graphite (wt%) | Porosity (%) | Charging capacity (mAh/g) | Discharging capacity (mAh/g) | Efficiency (%) |
|---|---|---|---|---|---|
| Example 3-1 | 1.5 | 17.5 | 230.3 | 209.3 | 90.9 |
| Example 3-2 | 0.6 | 19 | 229.4 | 206.9 | 90.2 |
| Example 3-3 | 0.4 | 20 | 230.4 | 207.3 | 90.0 |
| Example 3-4 | 0.2 | 21 | 229.1 | 205.5 | 89.7 |
| Comparative Example 3-1 | 0 | 24 | 229.1 | 204.2 | 89.1 |
| Comparative Example 3-2 | 0 | 30 | 225.4 | 199.7 | 88.6 |

Through Table 2, it may be found that Examples 3-1 to 3-4 using an positive electrode to which flake graphite is added shows lower porosity and excellent capacity characteristics compared to Comparative Examples 3-1 to 3-2.

Experimental Example 3-2 - Check resistance characteristics

While charging the coin half-cells including the positive electrodes according to Example 3-3, Comparative Example 3-1, and Comparative Example 3-2 to 4.2V, resistance characteristics according to SOC were measured. The experimental results are shown in FIG. 37.

Referring to FIG. 37, it may be found that the resistance value of Example 3-3, in which flake graphite is added to the positive electrode active material layer, is lower than those of Comparative Example 3-1 and Comparative Example 3-2, which do not include flake graphite, based on SOC 10%. This shows that when flake graphite is added to the positive electrode active material layer, resistance characteristics at low SOC are improved.

Experimental Example 3-3 - Measurement of high-temperature life characteristics and resistance increase rate

A separator was interposed between the positive electrode and the negative electrode according to Example 3-1, Example 3-3, and Comparative Example 3-1, and stacked in the order of separator/positive electrode/separator/negative electrode, and then wound to prepare a jelly-roll type electrode assembly. The electrode assembly prepared as described above was inserted into a cylindrical battery housing, and then an electrolyte was injected thereto to manufacture a 4680 cell.

At this time, a negative electrode active material (graphite : SiO = 95: 5 mixture by weight): conductive material (super C): styrene-butadiene rubber (SBR): carboxymethyl cellulose (CMC) were mixed in water at a weight ratio of 96:2: 1.5 : 0.5 to prepare a negative electrode slurry, and then the negative electrode slurry was coated on to one surface of a copper current collector sheet, dried at 150°C, and then rolled to prepare a negative electrode.

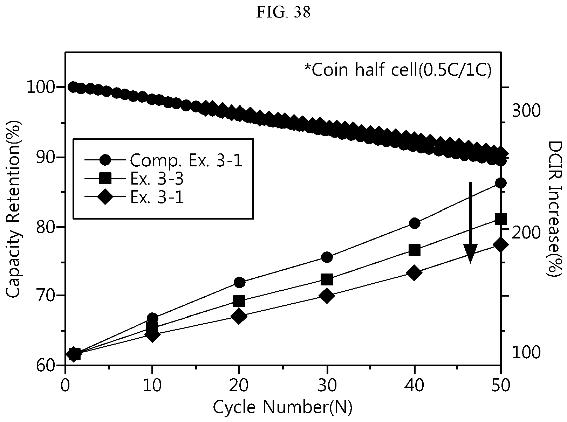

Based on one cycle in which the 4680 cell prepared as described above was charged to 4.2V at 40°C at 0.5C and then discharged to 2.5V at 0.5C, 50 cycles of charge and discharge were performed, and then capacity retention and resistance increase rate (DCIR increase) were measured. The measurement results are shown in FIG. 38.

Referring to FIG. 38, in the case of the secondary batteries of Examples 3-1 and 3-3, it is shown that the change in capacity retention according to the number of cycles is smaller than that of the secondary battery of Comparative Example 3-1, and the change in resistance increase rate according to the number of cycles is also small.

In the cylindrical battery of the present disclosure, the positive electrode as described above may be the first electrode, and the negative electrode may be the second electrode. In contrast, the positive electrode may be the second electrode, and the negative electrode may be the first electrode.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Claims**

1. A cylindrical battery, comprising:

   an electrode assembly in which a first electrode having a first uncoated portion and a first coated portion, a second electrode having a second uncoated portion and a second coated portion, and a separator interposed between the first electrode and the second electrode;
   a battery housing configured to accommodate the electrode assembly through an open portion formed in one side and electrically connected to the electrode assembly;
   a battery terminal configured to penetrate a closed portion of the battery housing located in a side opposite to the open portion and electrically connected to the electrode assembly; and
   a cap plate configured to cover the open portion,
   wherein the first electrode includes at least one insulation layer configured to simultaneously cover at least a part of the first uncoated portion and at least a part of the first coated portion, and
   at least a part of the first uncoated portion is used as an electrode tab by itself.

2. The cylindrical battery according to claim 1,

   wherein the battery terminal is electrically connected to the first uncoated portion having a first polarity, and

the battery housing is electrically connected to the second uncoated portion having a second polarity opposite to the first polarity.

3. The cylindrical battery according to claim 1,
   wherein the battery terminal includes:

   a terminal exposing portion configured to extend to the outside of the battery housing; and
   a terminal insert portion configured to penetrate the closed portion of the battery housing.

4. The cylindrical battery according to claim 1, further comprising:
   an insulating gasket interposed between the battery housing and the battery terminal to insulate the battery terminal and the battery housing from each other.

5. The cylindrical battery according to claim 4,
   wherein the insulating gasket includes:

   a gasket exposing portion configured to extend to the outside of the battery housing; and
   a gasket insert portion configured to penetrate an upper surface of the battery housing.

6. The cylindrical battery according to claim 1,
   wherein the battery terminal is riveted onto an inner surface of the battery housing.

7. The cylindrical battery according to claim 1,
   wherein the cap plate is insulated from the electrode assembly to have no polarity.

8. The cylindrical battery according to claim 1,
   wherein the insulation layer is provided on both surfaces of the first electrode.

9. The cylindrical battery according to claim 1,
   wherein one end in a winding axis direction of the insulation layer is located at the same height as one end in the winding axis direction of the separator or outside one end.

10. The cylindrical battery according to claim 1,
    wherein one end in a winding axis direction of the insulation layer is located at the same height as one end in the winding axis direction of the separator.

11. The cylindrical battery according to claim 1,
    wherein the first uncoated portion protrudes further to the outside of the insulation layer.

12. The cylindrical battery according to claim 1,
    wherein the first coated portion does not protrude more in a winding axis direction than the separator.

13. The cylindrical battery according to claim 1,
    wherein the first electrode is a positive electrode.

14. The cylindrical battery according to claim 1,
    wherein one end of the second electrode facing the insulation layer with the separator interposed therebetween does not protrude more to the outside than one end of the separator.

15. The cylindrical battery according to claim 1,
    wherein the first coated portion includes a sliding portion in which the thickness of the active material layer is reduced compared to a central region of the first coated portion.

16. The cylindrical battery according to claim 15,
    wherein the sliding portion is formed in a boundary region of the first coated portion and the first uncoated portion.

17. The cylindrical battery according to claim 15,
    wherein the sliding portion is provided at one end of the first electrode and the other end of the second electrode, respectively.

18. The cylindrical battery according to claim 15,
wherein the sliding portion of the first coated portion provided in the first electrode and the sliding portion of the second coated portion provided in the second electrode are provided in opposite directions to each other.

19. The cylindrical battery according to claim 17,
wherein the separator protrudes outward more than the other end of the first electrode and one end of the second electrode.

20. The cylindrical battery according to claim 15,
wherein the insulation layer covers at least a part of the sliding portion.

21. The cylindrical battery according to claim 1,

wherein the active material layer of the first electrode includes a positive electrode active material containing a single particle, a pseudo-single particle, or a combination thereof,
$D_{min}$, which a minimum particle size in a cumulative volume distribution of the positive electrode active material, is 1.0 $\mu$m or more;
in the volume cumulative distribution of the positive electrode active material, $D_{50}$, which is a particle size when a volume cumulative amount is 50%, is 5.0 $\mu$m or less, and
$D_{max}$, which is a maximum particle size in the volume cumulative distribution of the positive electrode active material, is 12 $\mu$m to 17 $\mu$m.

22. The cylindrical battery according to claim 21,
wherein the positive electrode active material has a unimodal particle size distribution showing a single peak in a volume cumulative particle size distribution graph, and the particle size distribution (PSD) represented by the following formula is 3 or less:

$$PSD = (D_{max} - D_{min})/D_{50.}$$

23. The cylindrical battery according to claim 21,
wherein the single particle, the pseudo-single particle, or the combination thereof is included in an amount of 95 wt% to 100 wt% based on the total weight of the positive electrode active material included in the active material layer of the first electrode.

24. The cylindrical battery according to claim 21,
wherein the positive electrode active material includes a lithium nickel-based oxide containing 80 mol% or more of Ni based on the total number of moles of a transition metal.

25. The cylindrical battery according to claim 21,

wherein the active material layer of the first electrode has a porosity of 15% to 23%, and
the active material layer of the first electrode contains flake graphite in a weight ratio of 0.05 wt% to 5 wt%.

26. The cylindrical battery according to claim 21,
wherein the active material layer of the first electrode further contains carbon nanotubes.

27. The cylindrical battery according to claim 21,

wherein the active material layer of the second electrode includes a silicon-based negative electrode active material and a carbon-based negative electrode active material, and
the silicon-based negative electrode active material and the carbon-based negative electrode active material are included in a weight ratio of 1 : 99 to 20 : 80.

28. A battery pack, comprising:

a plurality of cylindrical batteries according to any one of claims 1 to 27; and
a pack housing configured to accommodate the plurality of cylindrical batteries.

**29.** A vehicle, comprising the battery pack according to claim 28.

FIG. 1

FIG. 2

FIG. 3

FIG. 4

FIG. 5

FIG. 6

FIG. 7

FIG. 8

FIG. 9

FIG. 10

Power Distribution in Several Short Circuit Cases

(1)Positive Electrode Coated Portion*
Negative Electrode Coated Portion:~1 ohm
(2)Positive Electrode Coated Portion *
Negative Electrode Uncoated Portion:~1 ohm
(3)Negative Electrode Coated Portion *
Positive Electrode Uncoated Portion:~0.1 ohm
(4)Positive Electrode Uncoated Portion *
Negative Electrode Uncoated Portion:~0.001 ohm
→ P : (3)>(1), (2)>(4)

FIG. 11

FIG. 12

FIG. 13

50(80)

11a(12a)

10

C

Z

X

FIG. 14

50(80)

50(80)

11a(12a)

10

C

Z

X

FIG. 15

FIG. 16

FIG. 17

80

81

FIG. 18

3

1

2

FIG. 19

FIG. 20

New CNT

FIG. 21

Existing CNT

FIG. 22

| Property | | Existing CNT | New CNT |
|---|---|---|---|
| Powder | Specific Surface Area($m^2$/g) | 200~300 | 300~450 |
| | Diameter (nm) | 10 | 3~6 |
| | Wall Number | 9~14 | 2~5 |

FIG. 23

FIG. 24

FIG. 25

FIG. 26

0.5C/1.0C 45℃ Cycle(2.5-4.25V)

FIG. 27

| | #1 | #2 | #3 | #4 | #6 |
|---|---|---|---|---|---|
| Item | Existing CNT | New CNT | | | |
| Conductive Material Content | 0.90% | 0.45% | 0.50% | 0.55% | 0.6% |
| Solid Content | 67% | 73% | 72% | 71% | 70.5% |
| Viscosity (cp) | 7,000 | 8,500 | 6,400 | 6,900 | 6,600 |
| MP Coating Layer | 10.57 | 13.44 | 13.67 | 10.03 | 9.55 |
| MP Interface Layer | 0.095 | 0.106 | 0.070 | 0.061 | 0.053 |

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

400S

430    420    430    420    430    420  430

410

d3

d4

Slitting  Slitting  Slitting  Slitting  Slitting

FIG. 42

400S

410    430    420    430    420    430    420  430

d4

Slitting  Slitting  Slitting  Slitting  Slitting

FIG. 43

400

420

d3

d4

420B

410

430

FIG. 44

500S

530 520 530 520 530 520 530

510

d3

d4

Slitting Slitting Slitting Slitting Slitting

FIG. 45

500S

510

500DA  500C

530  530  520  530  520  530

d4

Slitting  Slitting  Slitting  Slitting  Slitting

FIG. 46

500

500D

520

d3

d4

520B

500D

510

530

FIG. 47

FIG. 48

FIG. 49

FIG. 50

800S

830  820  830  820  830  820  830

810

d4

Slitting  Slitting  Slitting  Slitting  Slitting

FIG. 51

Low efficiency SiO
Ultra-high efficiency SiO

Cell Energy Density(Wh/L)

0%    5%    10%    15%

SiO blending ratio in anode(%)

## INTERNATIONAL SEARCH REPORT

International application No.

**PCT/KR2022/016203**

| A. | CLASSIFICATION OF SUBJECT MATTER |
|---|---|

**H01M 10/04**(2006.01)i; **H01M 10/0587**(2010.01)i; **H01M 50/531**(2021.01)i; **H01M 10/42**(2006.01)i

According to International Patent Classification (IPC) or to both national classification and IPC

| B. | FIELDS SEARCHED |
|---|---|

Minimum documentation searched (classification system followed by classification symbols)

H01M 10/04(2006.01); H01M 10/052(2010.01); H01M 2/04(2006.01); H01M 2/12(2006.01); H01M 2/26(2006.01); H01M 2/34(2006.01); H01M 4/1315(2010.01); H01M 50/548(2021.01); H01M 50/559(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 원통형 배터리 셀(cylindrical battery cell), 절연(electrically insulation), 활물질층 (active material layer), 캡 플레이트(cap plate), 하우징(housing), 무지부(active material non-coated region), 리벳(rivet)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0041625 A (SAMSUNG SDI CO., LTD.) 22 April 2020 (2020-04-22)<br>See claims 1 and 4; paragraphs [0002], [0016] and [0028]-[0047]; and figures 1-5. | 1-29 |
| Y | CN 113346201 A (HUBEI YIWEI POWER CO., LTD.) 03 September 2021 (2021-09-03)<br>See claims 1 and 10; paragraphs [0042], [0062], [0089], [0090] and [0097]; and figures 1-3. | 1-29 |
| Y | JP 2011-216403 A (HITACHI VEHICLE ENERGY LTD.) 27 October 2011 (2011-10-27)<br>See claim 1; paragraphs [0023] and [0030]-[0032]; and figures 6 and 10. | 8-12,14-20 |
| Y | KR 10-2021-0079178 A (LG ENERGY SOLUTION, LTD.) 29 June 2021 (2021-06-29)<br>See claim 1; and paragraphs [0031], [0077], [0078], [0080], [0091] and [0120]. | 21-27 |
| A | KR 10-2006-0027276 A (SAMSUNG SDI CO., LTD.) 27 March 2006 (2006-03-27)<br>See entire document. | 1-29 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2023** | **06 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/016203**

| Patent document cited in search report | | | Publication date (day/month/year) | Patent family member(s) | | | Publication date (day/month/year) |
|---|---|---|---|---|---|---|---|
| KR | 10-2020-0041625 | A | 22 April 2020 | CN | 113169369 | A | 23 July 2021 |
| | | | | EP | 3866241 | A1 | 18 August 2021 |
| | | | | EP | 3866241 | A4 | 14 September 2022 |
| | | | | US | 2021-0344033 | A1 | 04 November 2021 |
| | | | | WO | 2020-075990 | A1 | 16 April 2020 |
| CN | 113346201 | A | 03 September 2021 | None | | | |
| JP | 2011-216403 | A | 27 October 2011 | JP | 5417241 | B2 | 12 February 2014 |
| KR | 10-2021-0079178 | A | 29 June 2021 | CN | 114747041 | A | 12 July 2022 |
| | | | | EP | 4047679 | A1 | 24 August 2022 |
| | | | | WO | 2021-125535 | A1 | 24 June 2021 |
| KR | 10-2006-0027276 | A | 27 March 2006 | CN | 1753231 | A | 29 March 2006 |
| | | | | CN | 1753231 | C | 26 November 2008 |
| | | | | JP | 2006-093136 | A | 06 April 2006 |
| | | | | JP | 4402637 | B2 | 20 January 2010 |
| | | | | KR | 10-0624919 | B1 | 15 September 2006 |
| | | | | US | 2006-0099500 | A1 | 11 May 2006 |
| | | | | US | 7541110 | B2 | 02 June 2009 |

Form PCT/ISA/210 (patent family annex) (July 2022)

**REFERENCES CITED IN THE DESCRIPTION**

**Patent documents cited in the description**

- KR 1020210142179